# EUROPEAN PATENT SPECIFICATION

(11) **EP 3 086 244 B1**
(45) Date of publication and mention of the grant of the patent: **03.10.2018**
(21) Application number: 16166262.2
(22) Date of filing: 20.04.2016
(51) Int. Cl.: G06F 17/30

(54) **DATABASE SYSTEM AND METHOD OF OPERATION THEREOF**
DATENBANKSYSTEM UND VERFAHREN ZUM BETRIEB DAVON
SYSTÈME DE BASE DE DONNÉES ET PROCÉDÉ DE FONCTIONNEMENT CORRESPONDANT

(30) Priority: 21.04.2015 US 201514692029
(43) Date of publication of application: 26.10.2016
(73) Proprietor: SAP SE, 69190 Walldorf (DE)
(72) Inventor: WENZLER, Rudolf, 69190 Walldorf (DE)
(74) Representative: Richardt Patentanwälte PartG mbB

(56) References cited:
- Inc. Microsoft: "Recursive Queries Using Common Table Expressions", , 11 August 2013 (2013-08-11), pages 1-5, XP055293260, Microsoft.com Retrieved from the Internet: URL:http://web.archive.org/web/20130811012 935/http://technet.microsoft.com/en-us/lib rary/ms186243%28v=sql.105%29.aspx [retrieved on 2016-08-03]
- JINGREN ZHOU ET AL: "Efficient exploitation of similar subexpressions for query processing", PROCEEDINGS OF THE ACM SIGMOD INTERNATIONAL CONFERENCE ON MANAGEMENT OF DATA, BEIJING, CHINA, JUNE 12-14, 2007., 14 June 2007 (2007-06-14), page 533, XP055293279, DOI: 10.1145/1247480.1247540 ISBN: 978-1-59593-686-8
- Wayne Sheffield: "Advanced Select Techniques" In: "SQL Server 2012 T-SQL Recipes: A Problem-Solution Approach", 18 September 2012 (2012-09-18), Apress, XP055293274, ISBN: 978-1-4302-4200-0 pages 93-113, * page 110 - page 112 * * *
- Wayne Sheffield: "Managing Views" In: "SQL Server 2012 T-SQL Recipes: A Problem-Solution Approach", 18 September 2012 (2012-09-18), Apress, XP055293277, ISBN: 978-1-4302-4200-0 pages 301-318, * page 301 - page 302 * * *
- Anonymous: "Remodeling Recursive Hierarchy Tables for Business Intelligence", , 3 June 2013 (2013-06-03), pages 1-9, XP055360362, Retrieved from the Internet: URL:https://smartbridge.com/remodeling-rec ursive-hierarchy-tables-for-business-intel ligence/ [retrieved on 2017-03-30]
- Rod Stephens: "Data Storage Design" In: "Expert One-on-One Visual Basic 2005 Design and Development", 5 February 2007 (2007-02-05), Wiley Publishing, Inc., XP055394684, ISBN: 978-0-470-05341-6 pages 133-162,
- Joe Celko: "Adjacency List Model" In: "Joe Celko's Trees and Hierarchies in SQL for Smarties", 7 May 2004 (2004-05-07), Morgan Kaufman, San Francisco, XP055394692, ISBN: 978-0-08-049169-1 pages 1-225,
- Anonymous: "Electronic document", Wikipedia, 26 November 2014 (2014-11-26), pages 1-2, XP055471490, Retrieved from the Internet: URL:https://en.wikipedia.org/w/index.php?t itle=Electronic_document&oldid=635493095 [retrieved on 2018-04-30]

## Description

### Field of the invention

The present disclosure relates to relational databases systems storing hierarchically structured sets of electronic documents. In particular, the present disclosure relates to effective storage and retrieval of hierarchy of electronic documents.

### Background

Relational databases can store a lot of electronic documents. The electronic documents can be linked by parent-child relations in hierarchically ordered sets of electronic documents. A number of electronic documents stored in such relational databases can in the range of millions or even billions, e.g. for applications such as applications for customer relationship management, human resource management, outsourcing relationship management, field service management, enterprise resource planning (ERP), enterprise content management (ECM), business process management (BPM), product lifecycle management, etc.. The electronic documents may contain a large number of document types (e.g., orders, shipping documents, invoices, goods movements, etc.). As a result thereof relational data describing parent-child relationships of the electronic documents becomes very big and complex and its usage requires considerable computer resources. Moreover the relational data can rapidly change in time, e.g. when new electronic documents are added to the relational database and/or the parent-child relationships between the electronic documents are changed.

For example, in the case of sales-related business transactions, individual transactions (e.g., inquiry, quotation, sales order, shipment, invoice, and returns, etc.) may be stored as individual sales documents (SD) in a "documents" or "documents flow" database. The relational data (so-called document flow or history) linking various individual documents may be stored in a database table linking various individual documents. An entire chain of sales documents (e.g., inquiry, quotation, sales order, shipment, invoice, and returns, etc.) may create a document flow or history. In such case, the stored relational data may include direct relations between individual documents (e.g., "order leading to shipment," "shipment leading to invoice," etc.). Additionally, the stored relational data may include indirect or transitive relations (e.g., "order indirectly leading to invoice," etc.). The indirect or transitive relations ("redundant data") can be a large portion (e.g., 50%) of the stored data. In scenarios which involve a large number of documents, the memory requirements for storing the redundant data can be onerous.
Almost any operation on the electronic documents executed by an application or a computer program requires evaluation of their hierarchic relations with other documents. As a result thereof processing of the hierarchic relations might cause substantial work load of the relational database.

The disclosure "Recursive Queries Using Common Table Expressions" discloses a common table expression (CTE) provides the significant advantage of being able to reference itself, thereby creating a recursive CTE. A recursive CTE is one in which an initial CTE is repeatedly executed to return subsets of data until the complete result set is obtained. A query is referred to as a recursive query when it references a recursive CTE. Returning hierarchical data is a common use of recursive queries, for example: Displaying employees in an organizational chart, or data in a bill of materials scenario in which a parent product has one or more components and those components may, in turn, have subcomponents or may be components of other parents. A recursive CTE can greatly simplify the code required to run a recursive query within a SELECT, INSERT, UPDATE, DELETE, or CREATE VIEW statement. In earlier versions of SQL Server, a recursive query usually requires using temporary tables, cursors, and logic to control the flow of the recursive steps. For more information about common table expressions (Inc. Microsoft: "Recursive Queries Using Common Table Expressions", 11 August 2013, pages 1-5, XP055293260, Microsoft.com, URL: https://technet.microsoft.com/enus/library/ms186243(v=sql.105).aspx). The textbook "Expert One-on-One Visual Basic 2005 Design and Development" discloses modeling a hierarchical data structure in a relational database using two separate tables for content and hierarchical relations (p.138). The paper "Efficient Exploitation of Similar Subexpressions for Query Processing" (SIGMOD'07 by Zhou et al) discloses re-using similar subexpressions within the same SQL query.

### Summary

A database system and a method of its operation are described herein. Hierarchic parent-child relationships of electronic documents stored in the relational da tabase are stored in a compact structure enabling effective retrieval of hierarchic structures of sets of the electronic documents. Although the hierarchic parent-child relations are stored in a simple and a compact format, it is possible to retrieve a hierarchic structure of a set of the electronic documents using a universal method which can be implemented using various hardware and software platforms. Moreover execution of this universal algorithm requires very little computer resources. In the other words the format for storing parent-child relationships in conjunction with said method enables to address objectives of contradictory nature, because as usual compact (expanded) storage of data and/or its structure increases (decreases) access time to it.

The invention is set out in the appended independent claims. It is an objective of embodiments of the invention to provide for a database system configured to provide access to hierarchic structure of hierarchically structured sets of electronic documents stored in the relational database, a computer-implemented method for providing access to said hierarchic structure, and a computer readable medium having stored thereon a computer executable program code for providing access to said hierarchic structure.

The aforementioned embodiments within the scope of the independent claims are advantageous because they can provide compact storage of parent-child relations of the electronic documents in the relational database in conjunction with effective procedure of retrieving of the parent-child relationships and the whole hierarchic structure from the relational database. Additionally, these embodiments describe a universal SQL query which can be used for processing of the data requests regarding hierarchic structure of different sets of electronic documents. Yet another advantage of these embodiments can be a compact storage of the parent-child relations in a single table, which avoids storing redundant/ duplicating/repetitive information. Adding a new electronic document to a set of electronic documents can require adding of only one additional tuple in the tuple table. Changes in the hierarchy in a set of the electronic documents requires changes only of relevant tuples without causing a consequent cascade of updates and/or changes. Furthermore, these embodiments can be advantageous, because they can provide an effective plan for query execution. The results generated as a result of evaluation of one of the hierarchy levels are used for evaluation of the next hierarchy levels. As a result thereof unnecessary repetition of the SQL query commands is avoided.

Additional advantageous embodiments are set out in the appended dependent claims. For instance, in an embodiment all parent-child relationships of the electronic documents of the parent set with the electronic documents of the child set identified in any repetitively executed step of the identifying of the child set of electronic documents, which execution resulted in a non-empty child set, have a hierarchy level in said hierarchical structure being one hierarchy level lower in said hierarchical structure than all parent - child relation-ships of the electronic documents of the parent set with the electronic documents of the child set identified in the step of the identifying of the child set of electronic documents executed immediately before the any repetitively executed step of the identifying of the child set of electronic documents.

This embodiment can be advantageous because it can provide extra structuring of the parent-child relationships in said hierarchic structure.

In another embodiment, the receiving of the data request for retrieving of said hierarchical structure of the parent-child relationships in one of the sets of the electronic documents the data request comprises receiving on the database system from a computer system via a computer network, wherein the returning of said hierarchical structure as the plurality of tuples determining parent - child relations between the electronic documents of all pairs of the child and the parent sets identified in the process of the repetitive executing of the identifying of the child set of electronic documents comprises sending the plurality of tuples to the computer system via the computer network.

This embodiment is advantageous, because in order to get said hierarchical structure the computer system can specify only the starting (root) document of the set of the electronic documents, while the database system performs the retrieval of said hierarchical structure according to internal standardized procedure.

In another embodiment, the SQL query comprises SQL union all commands configured to unite in a hierarchy table: the auxiliary tuple table generated in the first request comprised in the fragment of the SQL query corresponding to the first execution of the identification of the child set of electronic documents and all auxiliary tuple tables generated in one or more of the last requests corresponding to each of the fragments of the SQL query except the fragment of the SQL query corresponding to the first executed identification of the child set of the electronic documents in the process of the repetitive executing of the identifying of the child set of electronic documents, wherein said hierarchical structure returned in the returning of said hierarchical structure as the plurality of tuples determining parent - child relations between the electronic documents of all pairs of the child and the parent sets identified in the process of the repetitive executing of the identifying of the child set of electronic documents is the hierarchy table.

This embodiment can be advantageous because said hierarchic structure is retrieved as a result of execution of the single SQL query without the need to store intermediate results related to different hierarchy levels.

In another embodiment, the SQL is an American National Standards Institute SQL, ANSI-SQL.

This embodiment can be advantageous, because it specifies one of the most recognized dialects of SQL. As a result thereof the retrieving of said hierarchical structure can be implemented using a broad spectrum of software and/or hardware platforms.

In another embodiment, a number of hierarchy levels in any of the sets of electronic documents is less or equal to a maximum predefined number of hierarchy levels.

This embodiment can be advantageous because it can provide for a standardized SQL query for retrieving of the hierarchical structure of any of the sets of electronic documents stored in the relational database.

In another embodiment, said hierarchical structure returned in the returning of said hierarchical structure as a plurality of tuples determining parent - child relations between the electronic documents of all pairs of the child and the parent sets identified in the process of the repetitive executing of the identifying of the child set of electronic documents is formulated as an Advanced Business Application Programming, ABAP, consumable.

This embodiment can be advantageous, because it provides for an output format which is compatible with the widely used ABAP.

In another embodiment, the computer-implemented method comprises generating a database view configured to view or access a complete set of documents data spanning a specified number M of hierarchical levels in the documents database, wherein said hierarchical structure returned in the returning of said hierarchical structure as a plurality of tuples determining parent - child relations between the electronic documents of all pairs of the child and the parent sets identified in the process of the repetitive executing of the identifying of the child set of electronic documents is returned in a form of the database view.

This embodiment can be advantageous, because it provides for a universal template (the database view) for retrieving a hierarchic structure of any stet of electronic documents. The universal template can require very little memory space and can be stored in the relational database.

In another embodiment, wherein the database view is specified in Data Descriptive Language, DDL, and is coded to limit access to selected data in the documents database by using "where" clauses in "select" statements.

This embodiment can be advantageous, because the database view is formulated in a widely spread DDL using a limited number of operands in a repetitive way. As a result thereof an effective query plan can be generated.

In another embodiment the repetitive executing of the identifying of the child set of electronic documents comprises assessing of the database view via execution of a Structured Query Language, SQL, query comprising nested self-join commands of American National Standards Institute SQL, ANSI-SQL, to self-join a database table 1 to M times to generate data records with hierarchy levels 1 to M, respectively, the database table storing tuples.

This embodiment can be advantageous because it can provide for a standardized SQL query for retrieving of the hierarchical structure of any of the sets of electronic documents stored in the relational database. Another advantage of this embodiment can be utilization of nested self-join commands which use the same table. Repetition of the same commands using the same table can enable generation of an effective query plan in conjunction with effective utilization of memory space, i.e. without the need to reserve memory space for storing intermediate results.

The details of one or more implementations are set forth in the accompanying drawings and the description below. Further features of the disclosed subject matter, its nature and various advantages will be more apparent from the accompanying drawings, the following detailed description, and the claims.

### Brief Description of the Drawings

**FIG. 1** is an illustration of an example hierarchical tree-like structure that may be assigned by a hierarchical data model to sales transactions data.
**FIG. 2** is a tabular representation of a 2- hierarchy level tree-like structure model of a document flow.
**FIG. 3** is another tabular representation of the 2-hierarchy level tree-like structure model of the document flow of FIG. 2.
**FIG. 4** is a schematic block diagram showing an example business application computer system including a relational database.
**FIG. 5** is a schematic illustration of an example query plan, which may be established on a computing platform for executing a database view.
**FIG. 6** is an illustration of an example timeline view of the execution of the example query plan of FIG. 5.
**FIG. 7** illustrates an example computer-implemented method.
**FIG. 8** illustrates an example computer-implemented method.
**FIG. 9** illustrates an example tuple table.
**FIG. 10** illustrates an example SQL query.
**FIG. 11** illustrates an example auxiliary tuple table.
**FIG. 12** illustrates an example auxiliary tuple table.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

A hierarchical data model is used to assign a hierarchical tree-like structure to relational "business transactions data" or "documents" data that may be consumed by a business application or may be stored in a database, in accordance with the principles of the present disclosure.

Beginning with a root node object, each branch (or sub branch) of the tree-like structure may represent a direct object-object relation in the data. The hierarchical tree-like structure may include several levels of hierarchy with each level defined by the direct relations between the pairs of tree nodes/objects in the level.

For convenience in description herein, the terms "database", "table" and "database table" may be used interchangeably herein. Further, the terms "business transactions data" and "documents" may be used interchangeably herein.

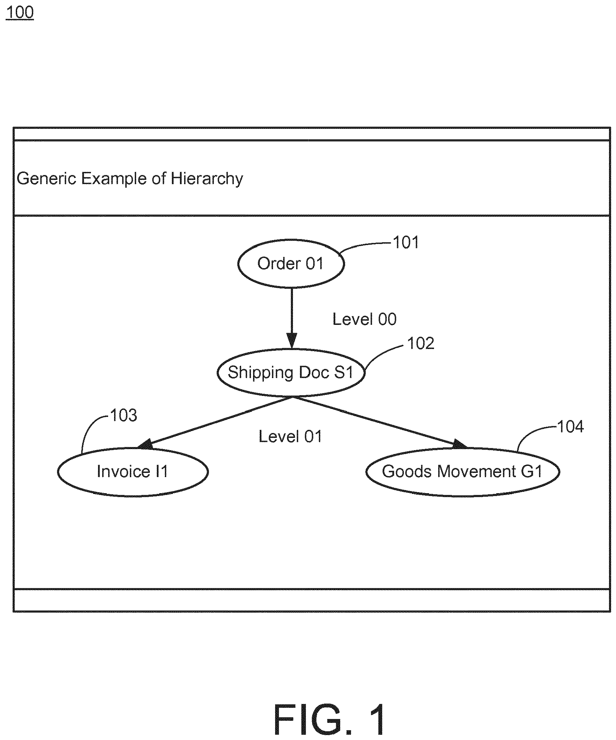

FIG. 1 shows, for example, a hierarchical tree-like structure that may be assigned by the hierarchical data model to the data in a use case involving sales transactions data. The sales transactions data may include objects or documents such as orders, shipping documents, invoices, goods movements, etc. These documents may relate to each other as predecessor and successor. For example, an order document (predecessor) may lead to a shipment document (successor). The shipment document (predecessor) may lead to an invoice document (successor) and/or a goods movement documents (successor). FIG. 1 schematically shows a 2-heirachy level tree-like structure model representation 100 of the document flow in the foregoing example. In tree-like structure model representation 100, document 101 (e.g., order O1) is the root node of the tree-like structure and document 102 (e.g., shipping document S1) is a successor object to the root node object. The predecessor-successor relationship between root node (document 101) of the tree-like structure and document 102 may define a first level of the hierarchy starting from the root node. Document 102 (e.g., shipping document S1) has predecessor-successor relationships with document 103 (e.g., invoice document 11) and document 104 (e.g., goods movement document G1). These predecessor-successor relationships may define a second level of the hierarchy starting from the root node. (For convenience, the first level and the second level of the hierarchy are visually labeled in FIG. 1 as "Level 00" and "Level 01," respectively).

With reference to the 2-heirachy level tree-like structure model representation shown in FIG. 1, it will be noted that if document 102 (e.g., shipping document S1) were to be considered to be a root node of a sub-tree, the predecessor-successor (parent-child) relationships between shipping document S1 and documents 103 and 104 would define a first level of the hierarchy starting from the root node (S1) of the sub-tree.

Only direct object-object (parent-child) relationships for a predetermined number of hierarchy levels "n" may be stored in a business application database or table constructed or assembled under the foregoing hierarchical data model, in accordance with the principles of the present disclosure.

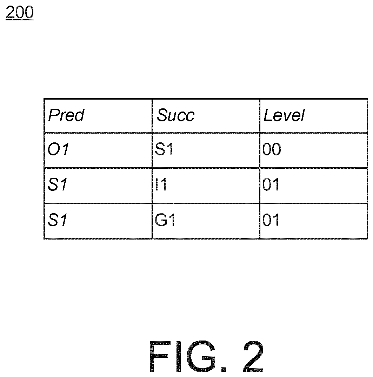

FIG. 2 shows an example database table 200 representing the 2-hierarchy level tree-like structure 100 of a document flow. Table 200 may be assembled using, for example, Advanced Business Application Programming (ABAP) language and SQL commands. Table 200 may be made available to users as an ABAP consumable. As shown in FIG. 2, table 200 may include rows indicating that order document O1 and shipping document S1 are directly related as predecessor (pred) and successor (succ) objects in hierarchy level 00, shipping document S1 and invoice document I1 are directly related as predecessor and successor objects in hierarchy level 01, and further shipping document S1 and goods movement document G1 (11) are also directly related as predecessor and successor objects in hierarchy level 01.

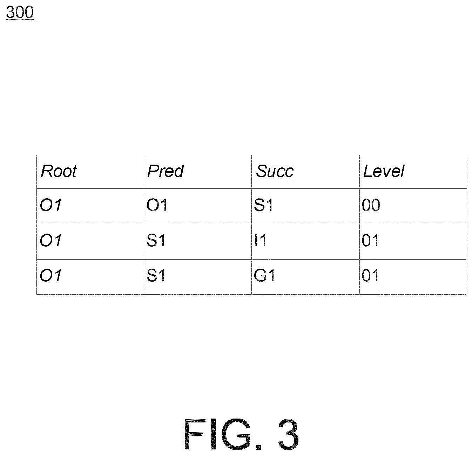

FIG. 3 shows another example database table 300 of the 2-hierarchy level tree-like structure 100 of FIG. 1. Table 300, like table 200 may be made available to users as an ABAP consumable. Table 300 may be an extension or enrichment of table 200 (FIG. 2) by further including the root node (e.g., O1) as a column or key in the table. Such extension or enrichment of the database table may be useful, for example, when multiple hierarchies for multiple roots are selected for inclusion or querying in the database tables. Including the root node (e.g., O1) as a column or key in the table may advantageously allow data for the multiple hierarchies to be read in one select/round-trip to the database.

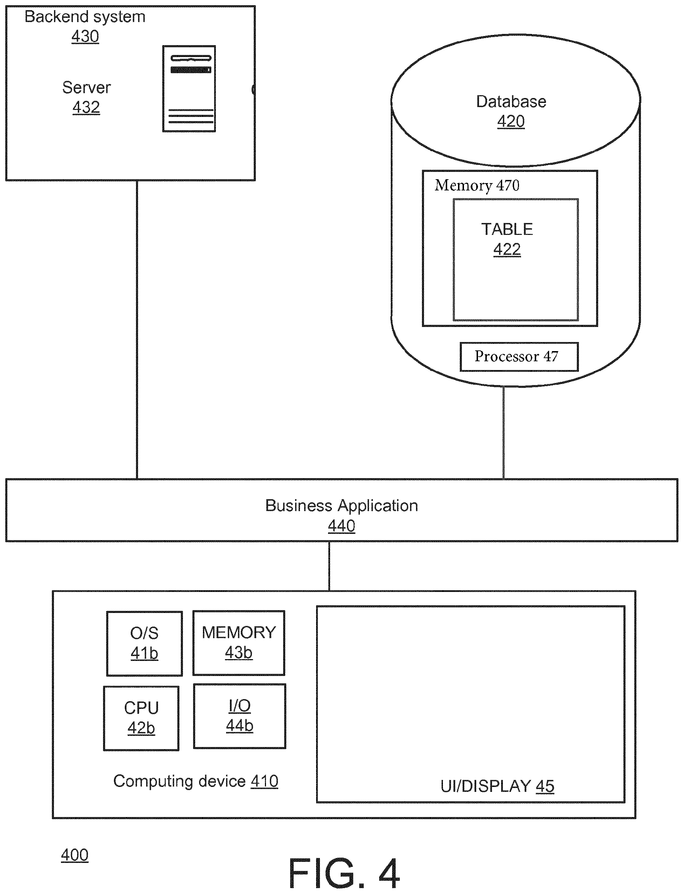

FIG. 4 is a schematic block diagram showing an example business application system including a relational database stored in a memory 470 of a database system 420, in accordance with the principles of the present disclosure. The database system comprises a computing device 47 (e.g. one or more computer microprocessors) to execute a processor executable program code in order to operate the relational database and/or execute steps of computer-implemented methods described herein. The computer executable code can be stored in the memory 470 of the database system 420.

System 400 may include a business application 440 coupled to relational database. Business application 440 may generate business transactions data (e.g., documents) to be stored in relational database and/or may consume the business transactions data stored in relational database .The database comprises memory 470 storing sets of electronic documents.

Business application 440 may, for example, be hosted or launched on a computer 410. Computer 410, which includes an O/S 41b, a CPU 42b, a memory 43b, and I/O 44b, may further include a user interface (Ul) or display 45. Although computer 410 is illustrated in the example of FIG. 4 as a single computer, it may be understood that computer 410 may represent two or more computers in communication with one another. Therefore, it will also be appreciated that any two or more components 420-440 of system 400 may similarly be executed using some or all of the two or more computers in communication with one another. Conversely, it also may be appreciated that various components illustrated as being external to computer 410 may actually be implemented therewith. In an example scenario, business application 440 may be an application, which can run on computer 410 or, for example, in another computing environment (e.g., Backend system 430/Server 432).

As noted previously, a hierarchical data model may assign a hierarchical tree-like structure to the business transactions data that may be stored in a form of electronic documents in relational database with each branch (or sub branch) of the tree representing a direct object-object (parent-child) relationship. The parent-child relationship data may be stored in a table (e.g., Table 422) in a format, which, for example, is similar to that of table 200 (FIG. 2). Consumable representations (e.g., similar in format to table 200 or table 300) of the business transactions data stored in relational database may be generated on the fly and made available to users, for example, as single query responses. The electronic documents can be grouped in sets, each having its own hierarchical structure of the electronic documents.

In an example implementation, the database or table (e.g., Table 422) may be constructed using ANSI-SQL compatible declarations (e.g., Open-SQL declarations), in accordance with the principles of the present disclosure.

Predecessor objects and successor objects in the database or table (e.g., Table 422) may, for example, be defined as follows.

Predecessor: (Document ID (attribute VBELV), Item number (attribute POSNV), Document type (attribute VBTYP_V)).

Successor: (Document ID (attribute VBELN), Item number (attribute POSNN), Document type (attribute VBTYP_N)).

A pre-determined number of hierarchy levels may be included in the tree-like structure representation of the data in the database or table (e.g., Table 422). The database or table may be configured using the ANSI-SQL compatible declarations so that a single database view (or query) can retrieve a complete hierarchical view of the data.

A business application or user may need to view or use data stored in a documents database or table. The documents database may be a relational database that includes only direct object-object (parent-child) relationships data for a pre-determined number of hierarchy levels "n" (as shown, for example, in Table 200), or may be a database (e.g., a legacy database) that includes additional data (e.g., data on indirect relationships). The documents database or table may be dynamic or volatile database, and may contain a large number of data records, which may be updated frequently.

A database view (or a stored query) may be established to view or extract selected data from the database e.g., from table 422 storing parent-child relationships of the electronic documents) consistent with the hierarchical data model described herein. The result set (a virtual table) may be computed or collated dynamically on the fly from current data in the database when access to that database view is requested, for example, by the business application. The result set may be returned as a consumable to the business application. Consistent with the hierarchal data model described herein, a single database view may configured to view or access a complete set of documents data spanning a pre-determined number M of hierarchical levels in the database (e.g., Table 422). The single database view (query) may include SQL self-join commands to self join the database table (i.e. the database table storing parent-child relationships, e.g. table 422) N times to iteratively generate data records level-by-level for hierarchy levels up to N.

The database view (query, e.g. SQL query), which may, for example, be written in Data Descriptive Language (DDL), may be coded to limit access to the selected data (or the predetermined number of M of hierarchical levels) in the database by using "where" clauses in the "select" statements in the database view (query, e.g. SQL query) DDL declaration. The predetermined number of M of hierarchical levels for the database view (query, e.g. SQL query) may be specified at design time.

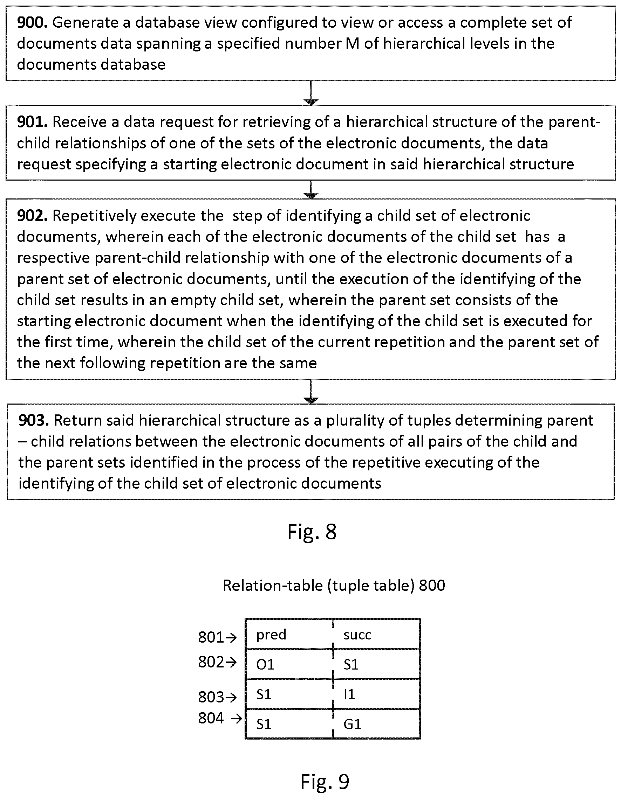

An example portion of a DDL declaration for a database view (query, e.g. SQL query) to view or retrieve document data for the M hierarchical levels (e.g., including levels L00 and L01) in the database table ("relation-table", e.g. "relation-table" on Fig. 9) may be as follows:

```
     /* sub-result set for level = 00 */
         (Select <level_00>.<pred>-key as root
                    <level_00>.<pred>-key as pred
                    <level_00>.<succ>-key as succ
                    '00' as level
         From <relation-table> as level_00) as L00
      Union all
     /* sub-result set for level = 01 */
         (Select <L01_L00>.<root>-key as root
                    <level_01>.<pred>-key as pred
                    <level_01>.<succ>-key aas succ
         From
         (Select <level_00>.<pred>-key as root
                    <level_00>.<pred>-key as pred
                    <level_00>.<succ>-key as succ
         From <relation-table> as level_00) as L01_L00
         Join <relation-table> as level_01
         On <level_01>.pred = <L01_L00>.succ) as L01
      Union all
:
:
     /* sub-result set for level = M */
:
      Union all.
```

As shown for levels L00 and L01 in the example above, in the DDL declaration of the database view (query), a specific "union all" branch may be declared for each of the M hierarchy levels to collect or view only the data for the corresponding hierarchy level.

In order to achieve this for level 'm', a nested self-join condition may be used in the "union all" branch for level 'm', which first retrieves the rows representing level 'm-1' in the database table. These rows representing level 'm-1' may be then joined with the database table again, to determine the rows representing level 'm'. For each of the M levels, the nesting-depth in the foregoing DDL declaration is increased by one.

The final hierarchy may be obtained by merging the sub-result sets of all levels, 1 to M, using the last "union all" declaration. From a declarative perspective, selecting the sub-result set for each of the M levels (as in the foregoing DDL declaration) can be executed independently and therefore in parallel. However, from an execution perspective, doing so may result in redundant, identical operations (e.g., in the nested joins in the "union all" branches up to level 'm-1' when executing level 'm'). However, the computing platform used for executing the database view (query) (e.g., database and application platform HANA) may take these possible redundant, identical operations into consideration to reduce sequential operations when establishing an optimal query plan.

An example query plan (e.g., in HANA) may be based on the recognition that the complete set of "join" operations (in a current "union all" branch in the foregoing DDL declaration) need not be executed sequentially. For some of the joins, results may be available from the join operations of a previous "union all" branch. These results could be re-used and accordingly re-execution of the previous result-producing joins may be avoided in the current "union all" branch. Only the joins for which results are not available from previous "union all" branches need to be executed in the current "union all" branch. Accordingly, the example query plan may (e.g., to reduce CPU demand) minimize or reduce sequential execution within the nested joins in the database view by limiting execution in a current "union all" branch only to those joins for which results are not be available from the execution of the previous "union all" branch.

Instead of executing the sequential joins for each of the "union all" branches up to level M concurrently or in parallel, the example query plan may stagger or delay execution of the nested joins for the current "union all" branch based, for example, on the completion of execution of the joins in the previous "union all" branch. For example, when accessing rows in the database table for a hierarchy level 5, all rows need to be calculated within the nested joins up to level 4 (i.e. Level 0 → Level 1 → Level 2 → Level 3 → Level 4). The nested joins for levels 0-3 may have already been calculated as part of the "union all" branch for level 4. Therefore, when accessing level 5, the staggered operations for calculation of the nested joins up to level 4 may start as soon as the nested join calculations up to level 3 (in the course of accessing level 4) are completed. Staggering the nested join operations for the different levels may reduce CPU demand. It may be expected that with the staggered operations, CPU consumption will dependent linearly on the number of levels accessed in the execution of the database view (query, e.g. SQL query).

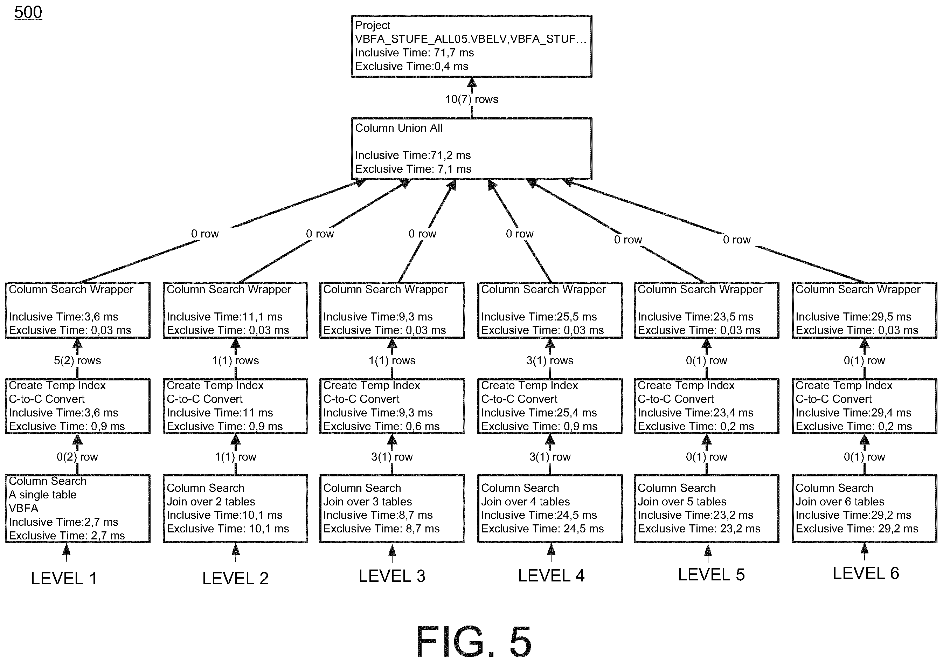

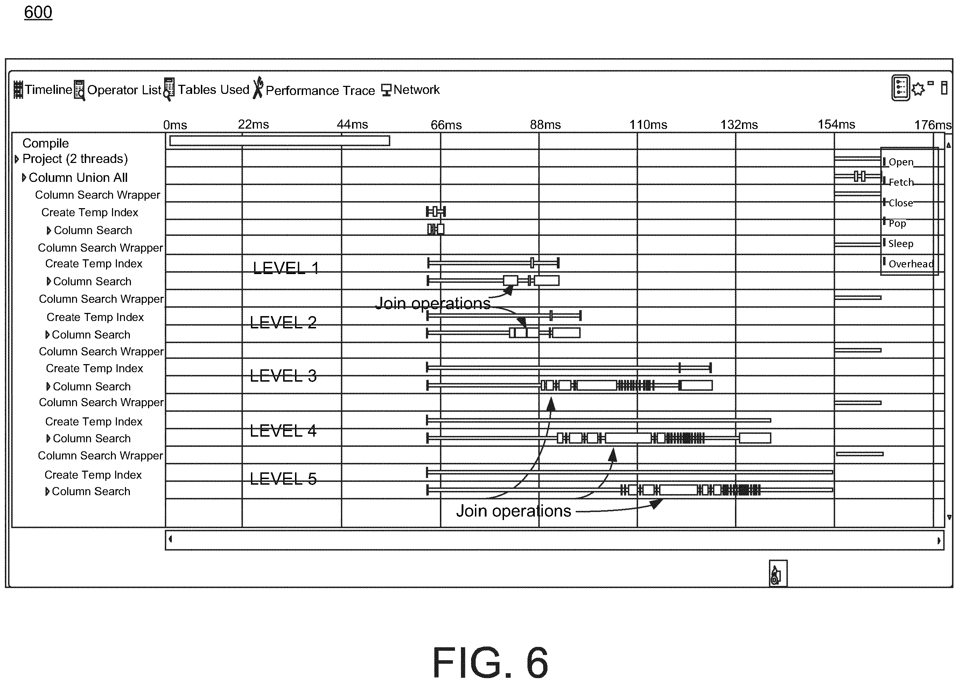

FIG. 5 shows an example query plan 500, which may be established in HANA, for a 6-hierarchy level database view (query, e.g. SQL query). Each independent vertical column of boxes in the figure represents a level-specific "union all" branch in the database view (query, e.g. SQL query). Further, FIG. 6 shows an example timeline view 600 of the execution of query plan 500. Timeline view 600 shows the staggered execution of the join operations in the parallel "union all" branches for levels 1-5 according to query plan 500. As shown in the figure, execution of join operations (at least for level 3 to 5) show considerable overlap in time. This overlap in execution times indicates that the execution time of the database view (query) may grow at most linearly with the number of levels queried.

Implementations of the hierarchical data model and a database view (query) (similar to that described above) were tested on a computer system, which included a HANA platform coupled to a sales documents (SD) database (e.g. table 422) having about 250 million rows of data.

Tests were conducted to determine execution time differences between a database level representation of the data, which involves storing only the direct object-object relations (as described herein), and a conventional database level representation of the data, which involves storing the complete tree structure including redundancies.

A test involved determining the execution times for returning a complete hierarchy for one example order document to a business application (1) when directly accessing table 422 storing parent-child relationships of the electronic documents, (e.g. SD documents in this example) (assuming that both direct and transitive relations, and the root-ID are persistently stored in table 422), and (2) when accessing the table 422 via the database view ("View) (assuming that only direct relations are persistently stored in table 422). The complete hierarchy for the one example order document included ten rows of data. Execution of the select statements to fetch the ten rows of data by accessing the table 422 directly took about 3.5 ms. Execution of the select statement to fetch the ten rows of data via View took about 38 ms. The longer time to fetch the hierarchy via View in the test was expected as it involved selecting only direct object-object relations and calculating or reconstructing the tree structure based on interpreting the direct object-object relations (in contrast to accessing the table 422 directly, which involved selecting an already persistently stored hierarchical tree-like structure directly from the table 422 without the need to interpret object-object relations).

Another test involved determining the execution times for returning multiple complete hierarchies (i.e. five hierarchies) for five example order documents to a business application (1) when accessing the table 422 directly and (2) when accessing the table 422 via View. Execution of the select statements to fetch the five hierarchies by accessing the table 422 directly took about 9 ms. Execution of the select statement to fetch the five hierarchies via View took about 68 ms.

These tests demonstrated fetching hierarchies from the database via View takes more time than fetching the hierarchies by direct access (e.g., 38 ms vs. 3.5 ms and 68 ms vs. 9ms). However, it will be noted that the times for fetching hierarchies from the database via View were still in an acceptable range on the order of tens of milliseconds (which may be below a human perception threshold, for example, when the results are displayed on a computer screen to a human user).

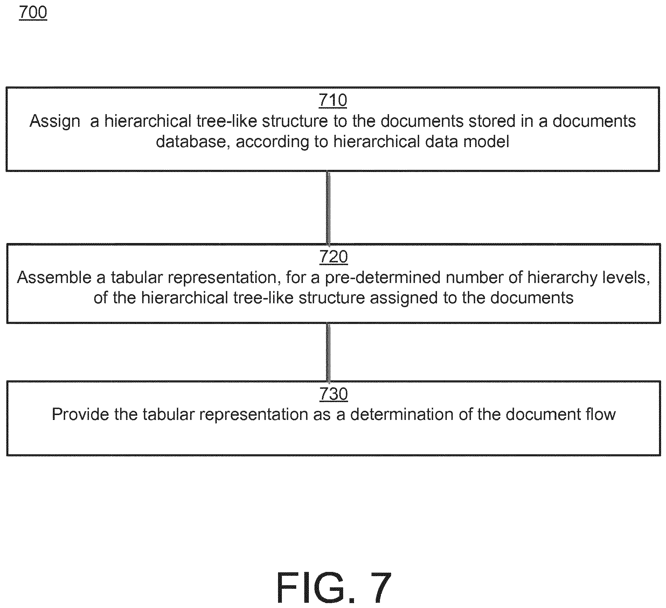

FIG. 7 shows an example computer-implemented method 700 for determining a document flow of documents (e.g., business transactions documents), in accordance with the principles of the present disclosure. Data on the documents (including relational data) may be stored in a documents database or table (e.g., Table 422).

Method 700 may include assigning a hierarchical tree-like structure to the documents stored in the documents database, according to a hierarchical data model (710). The hierarchical tree-like structure may include one or more hierarchy levels beginning with a document assigned to a root node of the tree-like structure. Each hierarchy level in the tree-like structure may be defined by direct relations between the documents assigned to pairs of tree nodes in the the hierarchy level. According to the hierarchical data model, stored redundant information (e.g., indirect or transitive relations between the tree nodes/documents) is not required or necessary to describe the whole tree-like structure. Instead this information can be dynamically calculated or reconstructed based on the stored direct relations and made available on the fly as a consumable as and when needed. Thus, consistent with the hierarchical data model, the data on the documents (including relational data) stored in the documents database or table may include only direct relations data.

Method 700 may further include assembling a tabular representation, for a pre-determined number of hierarchy levels, of the hierarchical tree-like structure assigned to the documents (720), and providing the tabular representation as a determination of the document flow (730).

In method 700, assembling the tabular representation 720 may include using Advanced Business Application Programming (ABAP) language and SQL commands. Further, providing the tabular representation 730 may include making the tabular representation available as an ABAP consumable and may include storing the tabular representation in the documents database.

Also in method 700, assembling the tabular representation 720 may include establishing a database view (query) to view or extract selected data from the documents database, the database view being configured to compute the tabular representation when access to the database view is requested by a user. The database view may be written in Data Descriptive Language (DDL) and may be coded to limit access to selected data in the database (e.g. Table 422 or Table 800) by using "where" clauses in "select" statements. Further, the database view may be configured to view or access a complete set of documents data spanning a specified number M of hierarchical levels in the documents database. The database view may include nested self-join commands to self-join a database table 1 to M times to generate data records with hierarchy levels 1 to M, respectively.

Method 700 may further include, establishing a query plan on a computing platform to optimize execution of the database view including the self- join commands. The query plan may involve, for a hierarchy level (m), executing only the self-join commands for which results are not available from executions of the self-join commands for a previous hierarchy level, and staggering execution of the self-join commands for one or more of the hierarchy levels with respect to the execution of the self-join commands for another the hierarchy levels.

FIG. 8 shows an example computer-implemented method for operating the database system 420. The database system comprises a memory 470 storing a relational database and a processor-executable program code. The relational database stores hierarchically structured sets of electronic documents. Hierarchy structures of the electronic documents in the hierarchically structured sets are determined by parent-child relationships of the electronic documents stored in the relational database as tuples identifying pairs of the electronic documents linked by the parent-child relationships. The tuples can be stored in a tuple table 800 depicted on Fig. 9. The database system further comprises a computing device 47 to execute the processor executable program code in order to cause the computing device to execute the computer-implemented method.

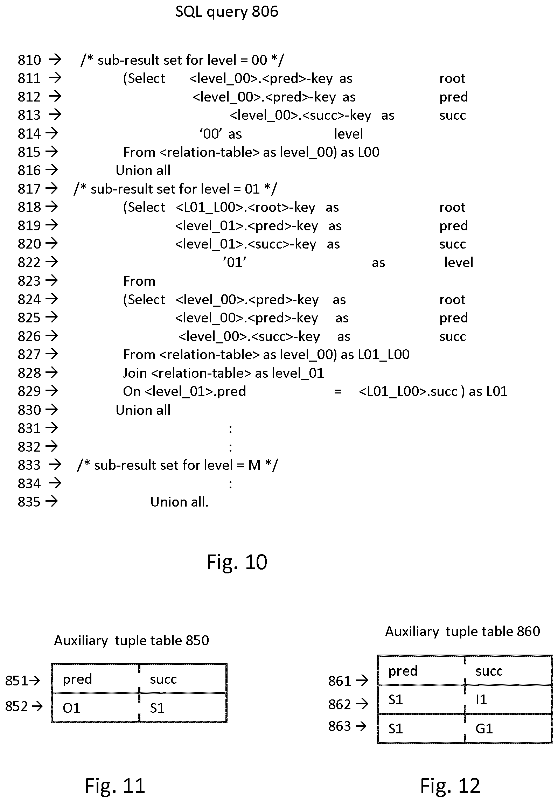

The computer-implemented method begins with an optional process block 900. In process block 900 a database view configured, as described above, to view or access a complete set of documents data spanning a specified number M of hierarchical levels in the documents database is generated. The database view can be accessed by executing the aforementioned query or an example query on Fig. 10. As mentioned above, the database view can be specified in DDL which is coded to limit access to selected data in the documents database by using "where" clauses in "select" statements. Further, the database view may be configured to view or access a complete set of documents data spanning a specified number M of hierarchical levels in the documents database. The database view may include nested self-join commands to self-join a database table 1 to M times to generate data records with hierarchy levels 1 to M, respectively.

Process block 901 is executed after process block 900 if the latter is executed otherwise execution of the computer-implemented method begins with process block 901. In process block 901 a data request for retrieving of a hierarchical structure 100 of the parent-child relationships of one of the sets of the electronic documents (e.g. a set of the electronic documents on Fig. 1) is received. The data request specifies a starting (root) electronic document in said hierarchical structure, e.g. electronic document O1 on Fig. 1. The data request can be received from a computer system (e.g. computer system 410) via a computer network.

Process block 902 is executed in response to execution of process block 900. In process block 901 a step of identifying a child set of electronic documents is repetitively executed. Wherein for each of the repetitive executions a child set of electronic documents is identified. Each of the electronic documents of the child set (e.g. electronic document S1 in the table on Fig. 2) has a respective parent-child relationship (e.g. parent-child relationship of level '00' on Fig. 1) with one of the electronic documents of a parent set of electronic documents (e.g. electronic document O1 in the table on Fig. 2). The repetitive execution of the identifying of the child set is executed until it results in an empty child set. The parent set consists of the starting (root) electronic document (e.g. electronic document O1 in the table on Fig. 2) when the identifying of the child set is executed for the first time. The child set of the current repetition (e.g. electronic document S1 in the first row of the table on Fig. 2) and the parent set of the next following repetition (e.g. electronic document S1 in the second and third row of the table on Fig. 2) are the same.

Process block 902 can be executed using the SQL query mentioned above or the SQL query 806 depicted on Fig. 10. When the latter SQL query is executed using the relation-table on Fig. 9 the table depicted on Fig. 3 is generated. The table on Fig. 3 can constitute the table view of process block 900. The queries can be formulated using the ANSI-SQL commands, or their compatible ones.

When the relation-table 800 on Fig. 9 is used for execution of the query on Fig. 10, then the resulting table on Fig. 3 is generated in 3 steps. First execution of the identification of the child set results in generation of the first row in the Table on Fig. 3. Second execution of the identification of the child set results in generation of the second and the third row in the Table on Fig. 3. Third execution of the identification of the child set results in an empty child set.

All parent-child relationships (e.g. parent-child relationships of level '01' on Fig. 1) of the electronic documents of the parent set (e.g. document S1 on Fig. 1) with the electronic documents of the child set (e.g. documents I1 and G1 on Fig. 1) identified in any repetitively executed step of the identifying of the child set of electronic documents, which execution resulted in a non-empty child set, (e.g. second execution of the identifying of the child set of electronic documents) have a hierarchy level (e.g. level '01' on Fig. 1) in said hierarchical structure being one hierarchy level lower in said hierarchical structure than all parent - child relationships (e.g. parent-child relationships of level '00' on Fig. 1) of the electronic documents of the parent set (e.g. document O1 on Fig. 1) with the electronic documents of the child set (e.g. document S1 on Fig. 1) identified in the step of the identifying of the child set of electronic documents (e.g. first execution of the identifying of the child set of electronic documents) executed immediately before the any repetitively executed step of the identifying of the child set of electronic documents.

Each of the identification of the child set of the electronic documents in the process of the repetitive executing of the identifying of the child set of electronic documents can have a respective fragment of the SQL query configured to identify the child set of the electronic documents identified in the each of the identification of the child set of the electronic documents. For instance a fragment of the example SQL query (lines 811-815) can generate the first row in the Table on Fig. 3 and another fragment of the example SQL query (lines 818 - 829) can generate the second and the third rows in the Table on Fig. 3. Each of the fragments of the SQL query except the fragment of the SQL query corresponding to the first executed identification of the child set of the electronic documents in the process of the repetitive executing of the identifying of the child set of electronic documents (e.g. lines 811 - 815 in the example query 806) comprises a respective sequence of recurrent requests (e.g. lines 818-823 and lines 824-827 in the example query 806) having at least first request of the sequence and the last request of the sequence. The first request (e.g. lines 824-827 in the example query 806) comprises one or more SQL select commands (e.g. lines 824-826 in the example query 806) being configured to identify the child set of electronic documents having the starting (root) electronic document as a parent electronic document by retrieving form the tuple table (e.g. relation-table 800) an auxiliary tuple table 850 of tuples in each of which the starting electronic document is specified as a parent electronic document. The recurrence of the requests in the sequence is determined as follows: every next request (including the last one) in the sequence of recurrent requests comprises one or more SQL select commands (e.g. lines 818-823 of the query 806) configured to identify the child set of the electronic documents each having parent-child relationship with one of electronic documents of the child set identified in the previous request in the sequence of recurrent requests by retrieving an auxiliary tuple table (e.g. table 860 on Fig. 12) of tuples in each of which one of the electronic documents of the child set identified in the previous request is specified as a parent electronic document from a table generated using an SQL join command (e.g. lines 828 and 829 in query 806) of an auxiliary tuple table (e.g. table 850 in Fig. 11) retrieved in the previous request and the tuple table (e.g. table 800 on Fig. 800) having a join condition specifying that all of the electronic documents specified as child electronic documents in one or more tuples of the auxiliary tuple table (e.g. table 850) retrieved in the previous request are specified as parent electronic documents in one or more tuples of the tuple table (e.g. table 800). Thus each of the last requests is configured to identify the child set identified in the respective execution of the step of the identification of the child set of electronic documents. In the other words, each of the sequences of recurrent requests is based on nested self-join SQL commands (e.g. lines 828 and 829 in query 806) to self-join a database table (e.g. table 800) 1 to M times to generate data records with hierarchy levels 1 to M, respectively. The fragment of the SQL query corresponding to the first executed identification of the child set of the electronic documents in the process of the repetitive executing of the identifying of the child set of electronic documents (e.g. lines 811 - 815 in the example query 806) comprises only the request being substantially similar or the same as the first requests in the sequences of the recurrent requests. This request comprises one or more SQL select commands (e.g. lines 811-815) being configured to identify the child set of electronic documents having the starting electronic document as a parent electronic document by retrieving form the tuple table (e.g. table 800) an auxiliary tuple table (e.g. table 850) of tuples in each of which the starting (root) electronic document is specified as a parent electronic document.

The SQL query can further comprise SQL union all commands (e.g. lines 816, 830, 835 in query 806) configured to unite in a hierarchy table (e.g. table on Fig. 3) the following tables: the auxiliary tuple table (e.g. Table 850) generated in the first request comprised in the fragment of the SQL query corresponding to the first execution of the identification of the child set of electronic documents and all auxiliary tuple tables (e.g. table 860) generated in one or more of the last requests corresponding to each of the fragments of the SQL query except the fragment of the SQL query corresponding to the first executed identification of the child set of the electronic documents in the process of the repetitive executing of the identifying of the child set of electronic documents. The query can be configured such that the hierarchy table (e.g. table on Fig. 3) represents said hierarchy structure (e.g. structure of electronic documents depicted on Fig. 1). In order to achieve this, in the example query 806 lines 814 and 822 are added in order to generate the 'level' column in the table on Fig. 3.

The repetitive executing of the identifying of the child set of electronic documents can comprise generating a query plan on the computing device 47 for the repetitive executing of the identifying of the child set of electronic documents, wherein the repetitive execution of the identifying of the child set of electronic documents is executed according to the query plan, wherein the query plan involves, for any hierarchy level except the first one in said hierarchical structure, executing only the nested self-join commands for which results are not available from executions of the nested self-join commands for a hierarchy level being one level higher than the any hierarchy level in said hierarchical structure. In particular the query plan can comprise staggering execution of the nested self-join commands (e.g. lines 828 and 829 in query 806) for one or more of the hierarchy levels with respect to the execution of the self-join commands for another the hierarchy levels. Details of this approach are discussed above and illustrated on Figs. 5 and 6. Nevertheless it can be formulated in greater details as follows.

The SQL query can be executed according to the following query plan, in which execution of the fragment of the SQL query (e.g. lines 811-815 in query 806) corresponding to the first execution of the identification of the child set of the electronic documents is scheduled first. Afterwards the execution of only the last request in each of the aforementioned fragments of the SQL query is scheduled, wherein execution of the last requests is scheduled in the same sequence as their respective steps of the identification of the child set of the electronic documents are executed in the process of the repetitive executing of the identifying of the child set of electronic documents. The auxiliary tuple table to be retrieved according to the query pan in the execution of the last request of any of the fragments of the SQL query except the fragment of the SQL query scheduled first for execution in the query plan is scheduled to be used as the auxiliary tuple table for the execution of the last request of the fragment of the SQL query scheduled for execution in the query plan after the last request of the any of the fragments of the SQL query except the fragment of the SQL query scheduled first for execution in the query plan. In the other words results obtained as result of execution of one of the last requests in the fragment of the SQL query are used directly for the execution of the next last request of another fragment of the SQL query without the need to execute any of the previous requests in the sequence of recurrent requests of the another fragment of the SQL query. When the SQL query is executed according to this query plan the lines 824 - 827 are not scheduled for execution, instead the results of execution of lines 811 - 815 are used as a substitute of the execution of the lines 824-827.

Turning back to the flow diagram of the computer implemented method depicted on Fig. 8, process block 903 is executed after process block 902. In process block 903 said hierarchical structure is returned as a plurality of tuples determining parent - child relations between the electronic documents of all pairs of the child and the parent sets identified in process block 902. The plurality of tuples can be sent to the computer system via the computer network. The plurality of tuples can be returned in a form of the hierarchy table mentioned above. The plurality of tuples can be returned in a form of the aforementioned database view as well.

The various systems and techniques described herein may be implemented in digital electronic circuitry, or in computer hardware, firmware, or in combinations of them. The various techniques (e.g., method 700 or method on Fig. 8) may implemented via a computer program product, i.e. a computer program with instructions tangibly embodied in a machine readable storage device, for execution by, or to control the operation of, data processing apparatus, e.g., a programmable processor, a computer, or multiple computers.

Method steps may be performed by one or more programmable processors executing a computer program to perform functions by operating on input data and generating output. Method steps also may be performed by, and an apparatus may be implemented as, logic circuitry or special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magnetooptical disks, or optical disks. Information carriers suitable for embodying computer program instructions and data include all forms of nonvolatile memory, including by way of example semiconductor memory devices, e.g., EPROM, EEPROM, and flash memory devices; magnetic disks, e.g., internal hard disks or removable disks; magnetooptical disks; and CDROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a backend component, e.g., as a data server, or that includes a middleware component, e.g., an application server, or that includes a frontend component, e.g., a client computer having a graphical user interface or a Web browser through which a user can interact with an implementation, or any combination of such backend, middleware, or frontend components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes.

## Claims

1. A database system (420) comprising:
a memory (470) storing a relational database and a processor-executable program code, the relational database storing hierarchically structured sets of electronic documents, wherein hierarchy structures of the electronic documents in the hierarchically structured sets are determined only by direct parent-child relationships of the electronic documents stored in the relational database as tuples (802-804) identifying pairs of the electronic documents linked by the direct parent-child relation-ships, wherein the tuples are stored as a tuple table (800) in the relational data base,and
a computing device (47) to execute the processor executable program code in order to cause the computing device to execute the following steps of a computer-implemented method: '
• receiving a data request for retrieving of a hierarchical structure (100) of the direct parent-child relationships of one of the sets of the electronic documents, the data request specifying a starting electronic document in said hierarchical structure (901);
• in response to the receiving of the data request for retrieving of said hierarchical structure of the direct parent-child relationships in one of the sets of the electronic documents repetitively executing the following step of
o identifying a child set of electronic documents using the tuple table, wherein each of the electronic documents of the child set has a respective direct parent-child relationship with one of electronic documents of a parent set of electronic documents ,
until the execution of the identifying of the child set results in an empty child set, wherein the parent set consists of the starting electronic document when the identifying of the child set is executed for the first time, wherein the child set of the current repetition and the parent set of the next repetition are the same (902); and
• returning said hierarchical structure as a plurality of tuples determining direct parent - child relations between the electronic documents of all pairs of the child and the parent sets identified in the process of the repetitive executing of the identifying of the child set of electronic documents (903),
wherein a process of the repetitive executing of the identifying of the child set of electronic documents is executed in a form of an Structured Query Language, SQL, query (806) of the relational database, wherein each of the identification of the child set of the electronic documents in the process of the repetitive executing of the identifying of the child set of electronic documents has a respective fragment of the SQL query (811 - 815, 818 - 829) configured to identify the child set of the electronic documents identified in the each of the identification of the child set of the electronic documents,
wherein each of the fragments of the SQL query except the fragment of the SQL query corresponding to the first executed identification of the child set of the electronic documents in the process of the repetitive executing of the identifying of the child set of electronic documents (811 - 815) comprises a respective sequence of recurrent requests (818-823, 824-827) having
- a first request (824-827) comprising one or more SQL select commands (824-826) being configured to identify the child set of electronic documents having the starting electronic document as a parent electronic document by retrieving form the tuple table an auxiliary tuple table (850) of tuples in each of which the starting electronic document is specified as a parent electronic document, wherein the first request is a first request in the respective sequence of recurrent requests, and
- a last request (818 - 823) configured to identify the child set of the electronic documents which is identified in the execution of the identification of the electronic documents corresponding to the each of the fragments of the SQL query except the fragment of the SQL query corresponding to the first executed identification of the child set of the electronic documents in the process of the repetitive executing of the identifying of the child set of electronic documents, wherein the last request is a first request in respective sequence of recurrent requests,
wherein every next request in the sequence of recurrent requests comprises one or more SQL select commands (818-823) being configured to identify the child set of the electronic documents each having direct parent-child relationship with one of electronic documents of the child set identified in the previous request in the sequence of recurrent requests
by retrieving an auxiliary tuple table (860) of tuples in each of which one of the electronic documents of the child set identified in the previous request is specified as a parent electronic document
from a table generated using an SQL join command (828, 829) of an auxiliary tuple table retrieved in the previous request and the tuple table having a join condition specifying that all of the electronic documents specified as child electronic documents in one or more tuples of the auxiliary tuple table retrieved in the previous request are specified as parent electronic documents in one or more tuples of the tuple table,
wherein the fragment of the SQL query corresponding to the first execution of the identification of the child set of electronic documents comprises only the first request (811 -815),
wherein the SQL query is executed according to a query plan, in which:
- execution of the fragment of the SQL query corresponding to the first execution of the identification of the child set of the electronic documents is scheduled first,
- after the execution of the fragment of the SQL query corresponding to the first execution of the identification of the child set of the electronic documents, execution of only the last request in each of the fragments of the SQL query is scheduled in the same sequence as their respective steps of the identification of the child set of electronic documents are executed in the process of the repetitive executing of the identifying of the child set of electronic documents, wherein the auxiliary tuple table to be retrieved according to the query plan in the execution of the last request of any of the fragments of the SQL query except the fragment of the SQL query scheduled first for execution in the query plan is scheduled to be used as the auxiliary tuple table for the execution of the last request of the fragment of the SQL query scheduled for execution in the query plan after the last request of the any of the fragments of the SQL query except the fragment of the SQL query scheduled first for execution in the query plan.

2. The database system of claim 1, wherein all direct parent-child relationships of the electronic documents of the parent set with the electronic documents of the child set identified in any repetitively executed step of the identifying of the child set of electronic documents, which execution resulted in a non-empty child set, have a hierarchy level in said hierarchical structure being one hierarchy level lower in said hierarchical structure than all direct parent - child relation-ships of the electronic documents of the parent set with the electronic documents of the child set identified in the step of the identifying of the child set of electronic documents executed immediately before the any repetitively executed step of the identifying of the child set of electronic documents.

3. The database system of any of the preceding claims, wherein the receiving of the data request for retrieving of said hierarchical structure of the direct parent-child relationships in one of the sets of the electronic documents the data request comprises receiving on the database system from a computer system (410) via a computer network, wherein the returning of said hierarchical structure as the plurality of tuples determining direct parent - child relations between the electronic documents of all pairs of the child and the parent sets identified in the process of the repetitive executing of the identifying of the child set of electronic documents comprises sending the plurality of tuples to the computer system via the computer network.

4. The database system of any one of the preceding claims, wherein the SQL query comprises SQL union all commands (816, 830, 835) configured to unite in a hierarchy table:
- the auxiliary tuple table (850) generated in the first request comprised in the fragment of the SQL query corresponding to the first execution of the identification of the child set of electronic documents and
- all auxiliary tuple tables (860) generated in one or more of the last requests corresponding to each of the fragments of the SQL query except the fragment of the SQL query corresponding to the first executed identification of the child set of the electronic documents in the process of the repetitive executing of the identifying of the child set of electronic documents,
wherein said hierarchical structure returned in the returning of said hierarchical structure as the plurality of tuples determining direct parent - child relations between the electronic documents of all pairs of the child and the parent sets identified in the process of the repetitive executing of the identifying of the child set of electronic documents is the hierarchy table.

5. The database system of any of the preceding claims, wherein the SQL is an American National Standards Institute SQL, ANSI-SQL.

6. The database system of any of the preceding claims, wherein a number of hierarchy levels in any of the sets of electronic documents is less or equal to a maximum predefined number of hierarchy levels.

7. The database system of any of the preceding claims, wherein said hierarchical structure returned in the returning of said hierarchical structure as a plurality of tuples determining direct parent - child relations between the electronic documents of all pairs of the child and the parent sets identified in the process of the repetitive executing of the identifying of the child set of electronic documents is formulated as an Advanced Business Application Programming, ABAP, consumable.

8. The database system of any one of the preceding claims, wherein the computer-implemented method comprises
• generating a database view configured to view or access a complete set of documents data spanning a specified number M of hierarchical levels in the documents database, wherein said hierarchical structure returned in the returning of said hierarchical structure as a plurality of tuples determining direct parent - child relations between the electronic documents of all pairs of the child and the parent sets identified in the process of the repetitive executing of the identifying of the child set of electronic documents is returned in a form of the database view (903).

9. The database system of claim 8, wherein the database view is specified in Data Descriptive Language, DDL, and is coded to limit access to selected data in the documents database by using "where" clauses in "select" statements.

10. The database system of any one of claims 8 or 9, wherein the repetitive executing of the identifying of the child set of electronic documents comprises accessing of the database view via execution of a Structured Query Language, SQL, query comprising nested self-join commands of American National Standards Institute SQL, ANSI-SQL, (828, 829) to self-join a database table (800) 1 to M times to generate data records with hierarchy levels 1 to M, respectively, the database table storing tuples.

11. A computer-implemented method for operating a database system (420) comprising:
a memory (470) storing a relational database and a processor-executable program code, the relational database storing hierarchically structured sets of electronic documents, wherein hierarchy structures of the electronic documents in the hierarchically structured sets are determined only by direct parent-child relationships of the electronic documents stored in the relational database as tuples identifying pairs of the electronic documents linked by the direct parent-child relationships, wherein the tuples are stored as a tuple table (800) in the relational data base, and
a computing device (47) to execute the processor executable program code in order to cause the computing device to execute the computer-implemented method, the computer-implemented method comprising:
• receiving a data request for retrieving of a hierarchical structure (100) of the direct parent-child relationships of one of the sets of the electronic documents, the data request specifying a starting electronic document in said hierarchical structure (901);
• in response to the receiving of the data request for retrieving of said hierarchical structure of the direct parent-child relationships in one of the sets of the electronic documents repetitively executing the following step of
∘ identifying a child set of electronic documents using the tuple table, wherein each of the electronic documents of the child set has a respective direct parent-child relationship with one of the electronic documents of a parent set of electronic documents,
until the execution of the identifying of the child set results in an empty child set, wherein the parent set consists of the starting electronic document when the identifying of the child set is executed for the first time, wherein the child set of the current repetition and the parent set of the next following repetition are the same (902); and
• returning said hierarchical structure as a plurality of tuples determining direct parent - child relations between the electronic documents of all pairs of the child and the parent sets identified in the process of the repetitive executing of the identifying of the child set of electronic documents (903),
wherein a process of the repetitive executing of the identifying of the child set of electronic documents is executed in a form of an Structured Query Language, SQL, query (806) of the relational database, wherein each of the identification of the child set of the electronic documents in the process of the repetitive executing of the identifying of the child set of electronic documents has a respective fragment of the SQL query (811 - 815, 818 - 829) configured to identify the child set of the electronic documents identified in the each of the identification of the child set of the electronic documents,
wherein each of the fragments of the SQL query except the fragment of the SQL query corresponding to the first executed identification of the child set of the electronic documents in the process of the repetitive executing of the identifying of the child set of electronic documents (811 - 815) comprises a respective sequence of recurrent requests (818-823, 824-827) having
- a first request (824-827) comprising one or more SQL select commands (824-826) being configured to identify the child set of electronic documents having the starting electronic document as a parent electronic document by retrieving form the tuple table an auxiliary tuple table (850) of tuples in each of which the starting electronic document is specified as a parent electronic document, wherein the first request is a first request in the respective sequence of recurrent requests, and
- a last request (818 - 823) configured to identify the child set of the electronic documents which is identified in the execution of the identification of the electronic documents corresponding to the each of the fragments of the SQL query except the fragment of the SQL query corresponding to the first executed identification of the child set of the electronic documents in the process of the repetitive executing of the identifying of the child set of electronic documents, wherein the last request is a first request in respective sequence of recurrent requests,
wherein every next request in the sequence of recurrent requests comprises one or more SQL select commands (818-823) being configured to
identify the child set of the electronic documents each having direct parent-child relationship with one of electronic documents of the child set identified in the previous request in the sequence of recurrent requests
by retrieving an auxiliary tuple table (860) of tuples in each of which one of the electronic documents of the child set identified in the previous request is specified as a parent electronic document
from a table generated using an SQL join command (828, 829) of an auxiliary tuple table retrieved in the previous request and the tuple table having a join condition specifying that all of the electronic documents specified as child electronic documents in one or more tuples of the auxiliary tuple table retrieved in the previous request are specified as parent electronic documents in one or more tuples of the tuple table,
wherein the fragment of the SQL query corresponding to the first execution of the identification of the child set of electronic documents comprises only the first request (811 -815),
wherein the SQL query is executed according to a query plan, in which:
- execution of the fragment of the SQL query corresponding to the first execution of the identification of the child set of the electronic documents is scheduled first,
- after the execution of the fragment of the SQL query corresponding to the first execution of the identification of the child set of the electronic documents, execution of only the last request in each of the fragments of the SQL query is scheduled in the same sequence as their respective steps of the identification of the child set of electronic documents are executed in the process of the repetitive executing of the identifying of the child set of electronic documents, wherein the auxiliary tuple table to be retrieved according to the query plan in the execution of the last request of any of the fragments of the SQL query except the fragment of the SQL query scheduled first for execution in the query plan is scheduled to be used as the auxiliary tuple table for the execution of the last request of the fragment of the SQL query scheduled for execution in the query plan after the last request of the any of the fragments of the SQL query except the fragment of the SQL query scheduled first for execution in the query plan.

12. A computer readable medium having stored thereon a computer executable program code for execution by a computer processor controlling a computing device of a database system, wherein execution of the instructions of the executable program code causes the computer processor controlling the computing device to perform the computer-implemented method of claim 11 on the database system.

## Patentansprüche

1. Datenbanksystem (420), umfassend:
einen Speicher (470), in dem eine relationale Datenbank und ein von einem Prozessor ausführbarer Programmcode gespeichert sind, wobei in der relationalen Datenbank hierarchisch strukturierte Sätze elektronischer Dokumente gespeichert sind, wobei die hierarchischen Strukturen der elektronischen Dokumente in den hierarchisch strukturierten Sätzen nur durch direkte Parent-Child-Beziehungen der elektronischen Dokumente bestimmt werden, die als Tupel (802-804) in der relationalen Datenbank gespeichert sind, die Paare aus den elektronischen Dokumenten identifizieren, die durch die direkten Parent-Child-Beziehungen verknüpft sind, wobei die Tupel als Tupel-Tabelle (800) in der relationalen Datenbank gespeichert sind, und
eine Rechenvorrichtung (47), um den von einem Prozessor ausführbaren Programmcode auszuführen, um zu bewirken, dass die Rechenvorrichtung die folgenden Schritte eines computerimplementierten Verfahrens ausführt: *
• Empfangen einer Datenanfrage zum Abrufen einer hierarchischen Struktur (100) der direkten Parent-Child-Beziehungen eines der Sätze der elektronischen Dokumente, wobei die Datenanfrage ein elektronisches Wurzeldokument in der hierarchischen Struktur (901) spezifiziert;
• wiederholtes Ausführen des folgenden Schrittes als Reaktion auf den Empfang der Datenanfrage zum Abrufen der hierarchischen Struktur der direkten Parent-Child-Beziehungen in einem der Sätze der elektronischen Dokumente:
∘ Identifizieren eines Child-Satzes elektronischer Dokumente unter Verwendung der Tupel-Tabelle, wobei jedes von den elektronischen Dokumenten des Child-Satzes jeweils eine direkte Parent-Child-Beziehung mit genau einem elektronischen Dokument eines Parent-Satzes elektronischer Dokumente hat,
bis die Ausführung des Identifizierens des Child-Satzes einen leeren Child-Satz als Ergebnis hat, wobei der Parent-Satz aus dem elektronischen Wurzeldokument besteht, wenn das Identifizieren des Child-Satzes das erste Mal ausgeführt wird, wobei der Child-Satz der aktuellen Wiederholung und der Parent-Satz der nächsten Wiederholung identisch sind (902); und
• Zurückschicken der hierarchischen Struktur als mehrere Tupel, durch die direkte Parent-Child-Beziehungen zwischen den elektronischen Dokumenten aller im Prozess des wiederholten Ausführens des Identifizierens des Child-Satzes elektronischer Dokumente identifizierten Paare aus den Child- und den Parent-Sätzen bestimmt werden (903)
wobei ein Prozess des wiederholten Ausführens des Identifizierens des Child-Satzes elektronischer Dokumente in Form einer Abfrage aus der relationalen Datenbank in Structured Query Language, SQL, ausgeführt wird (806), wobei jede Identifizierung des Child-Satzes der elektronischen Dokumente im Prozess des wiederholten Ausführens des Identifizierens des Child-Satzes elektronischer Dokumente jeweils ein Fragment der SQL-Abfrage (811-815, 818-829) enthält, das dafür ausgelegt ist, den Child-Satz der elektronischen Dokumente zu identifizieren, der in jeder Identifizierung des Child-Satzes der elektronischen Dokumente identifiziert wird,
wobei jedes von den Fragmenten der SQL-Abfrage, außer dem Fragment der SQL-Abfrage, das der ersten im Prozess des wiederholten Ausführens des Identifizierens des Child-Satzes elektronischer Dokumente (811-815) ausgeführten Identifizierung des Child-Satzes der elektronischen Dokumente entspricht, jeweils eine Abfolge wiederkehrender Anfragen (818-823, 824-827) umfasst, mit
- einer ersten Anfrage (824-827), die einen oder mehrere SQL-Select-Befehle (824-826) umfasst, die dafür ausgelegt sind, durch Abrufen einer Tupel-Untertabelle (850) aus Tupeln, in denen das elektronische Wurzeldokument jeweils als elektronisches Parent-Dokument spezifiziert ist, aus der Tupel-Tabelle den Child-Satz elektronischer Dokumente zu identifizieren, der das elektronische Wurzeldokument als elektronisches Parent-Dokument hat, wobei die erste Anfrage eine erste Anfrage in der jeweiligen Abfolge wiederkehrender Anfragen ist, und
- einer letzten Anfrage (818-823), die dafür ausgelegt ist, den Child-Satz der elektronischen Dokumente zu identifizieren, der beim Ausführen der Identifizierung der elektronischen Dokumente identifiziert wird, die jeweils den Fragmenten der SQL-Abfrage entsprechen, außer dem Fragment der SQL-Abfrage, das der ersten im Prozess des wiederholten Ausführens des Identifizierens des Child-Satzes elektronischer Dokumente ausgeführten Identifizierung des Child-Satzes der elektronischen Dokumente entspricht, wobei die letzte Anfrage jeweils eine erste Anfrage in einer Abfolge wiederkehrender Anfragen ist,
wobei jede nächste Anfrage in der Abfolge wiederkehrender Anfragen einen oder mehrere SQL-Select-Befehle (818-823) umfasst, die ausgelegt sind zum
Identifizieren des Child-Satzes der elektronischen Dokumente, die jeweils eine direkte Parent-Child-Beziehung mit genau einem der elektronischen Dokumente des Child-Satzes haben, der in der vorangehenden Anfrage in der Abfolge wiederkehrender Anfragen identifiziert worden ist,
durch Abrufen einer Tupel-Untertabelle (860) von Tupeln, in denen jeweils eines der elektronischen Dokumente des Child-Satzes, der in der vorangehenden Anfrage identifiziert worden ist, als elektronisches Parent-Dokument spezifiziert ist,
aus einer Tabelle, die unter Verwendung eines SQL-Join-Befehls (828, 829) aus einer Tupel-Untertabelle, die in der vorangehenden Anfrage abgerufen wurde, erzeugt wird, und wobei die Tupel-Tabelle eine Join-Bedingung aufweist, die spezifiziert, dass alle elektronischen Dokumente, die in einem oder mehreren Tupeln der Tupel-Untertabelle, die in der vorangehenden Anfrage abgerufen wurde, als elektronische Child-Dokumente spezifiziert sind, in einem oder mehreren Tupeln der Tupel-Tabelle als elektronische Parent-Dokumente spezifiziert sind,
wobei das Fragment der SQL-Abfrage, das der ersten Ausführung der Identifizierung des Child-Satzes elektronischer Dokumente entspricht, nur die erste Anfrage umfasst (811-815),
wobei die SQL-Abfrage gemäß einem Query-Plan ausgeführt wird, in dem:
- die Ausführung des Fragments der SQL-Abfrage, das der ersten Ausführung der Identifizierung des Child-Satzes der elektronischen Dokumente entspricht, als erstes geplant wird,
- nach der Ausführung des Fragments der SQL-Anfrage, das der ersten Ausführung der Identifizierung des Child-Satzes der elektronischen Dokumente entspricht, die Ausführung nur der letzten Anfrage in jedem der Fragmente der SQL-Abfrage in derselben Abfolge geplant wird, wie ihre jeweiligen Schritte der Identifizierung des Child-Satzes elektronischer Dokumente im Prozess der wiederholten Ausführung der Identifizierung des Child-Satzes elektronischer Dokumente ausgeführt werden, wobei die Tupel-Untertabelle, die gemäß dem Query-Plan bei der Ausführung der letzten Anfrage irgendeines der Fragmente der SQL-Abfrage außer dem Fragment der SQL-Abfrage, dessen Ausführung im Query-Plan als erstes geplant ist, abgerufen werden soll, zur Verwendung als Tupel-Untertabelle für die Ausführung der letzten Anfrage des Fragments der SQL-Abfrage, deren Ausführung im Query-Plan als letzte geplant ist, nach der letzten Anfrage irgendeines der Fragmente der SQL-Anfrage außer dem Fragment der SQL-Anfrage, dessen Ausführung im Query-Plan als letztes geplant ist, geplant ist.

2. Datenbanksystem nach Anspruch 1, wobei alle direkten Parent-Child-Beziehungen der elektronischen Dokumente des Parent-Satzes mit den elektronischen Dokumenten des Child-Satzes, die in irgendeinem wiederholt ausgeführten Schritt des Identifizierens des Child-Satzes elektronischer Dokumente identifiziert werden, dessen Ausführung einen nicht-leeren Child-Satz zum Ergebnis hat, eine Hierarchiestufe in der hierarchischen Struktur aufweist, die in der hierarchischen Struktur eine Hierarchiestufe tiefer ist als alle direkten Parent-Child-Beziehungen der elektronischen Dokumente des Parent-Satzes mit den elektronischen Dokumenten des Child-Satzes, die im Schritt des Identifizierens des Child-Satzes elektronischer Dokumente, der unmittelbar vor irgendeinem wiederholt ausgeführten Schritt des Identifizierens des Child-Satzes elektronischer Dokumente ausgeführt wird, identifiziert wird.

3. Datenbanksystem nach einem der vorangehenden Ansprüche, wobei das Empfangen der Datenanfrage zum Abrufen der hierarchischen Struktur der direkten Parent-Child-Beziehungen in einem der Sätze der elektronischen Dokumente das Empfangen der Datenanfrage am Datenbanksystems von einem Computersystem (410) über ein Computernetz umfasst, wobei das Zurückschicken der hierarchischen Struktur als die mehreren Tupel, die eine direkte Parent-Child-Beziehung zwischen den elektronischen Dokumenten sämtlicher Paare aus den Child- und den Parent-Sätzen bestimmen, die im Prozess des wiederholten Ausführens des Identifizierens des Child-Satzes elektronischer Dokumente identifiziert werden, das Senden der mehreren Tupeln an das Computersystem über das Computernetz umfasst.

4. Datenbanksystem nach einem der vorangehenden Ansprüche, wobei die SQL-Abfrage SQL-Union-All-Befehle (816, 830, 835) umfasst, die dafür ausgelegt sind, in einer Hierarchietabelle Folgendes zu vereinen:
- die Tupel-Untertabelle (850), die in der ersten Anfrage erzeugt wird, die in dem Fragment der SQL-Anfrage enthalten ist, das der ersten Ausführung der Identifizierung des Child-Satzes elektronischer Dokumente entspricht, und
- alle Tupel-Untertabellen (850), die in einer oder mehreren der letzten Anfragen erzeugt werden, die den einzelnen Fragmenten der SQL-Abfrage außer dem Fragment der SQL-Anfrage entsprechen, das der ersten ausgeführten Identifizierung des Child-Satzes der elektronischen Dokumente im Prozess des wiederholten Ausführens des Identifizierens des Child-Satzes elektronischer Dokumente entspricht,
wobei die hierarchische Struktur, die beim Zurückschicken der hierarchischen Struktur als mehrere Tupeln zurückgeschickt wird, durch die direkte Parent-Child-Beziehungen zwischen den elektronischen Dokumenten aller Paare aus den Child- und den Parent-Sätzen, die im Prozess des wiederholten Ausführens des Identifizierens des Child-Satzes elektronischer Dokumente identifiziert werden, die Hierarchietabelle ist.

5. Datenbanksystem nach einem der vorangehenden Ansprüche, wobei die SQL eine American National Standards Institute SQL, ANSI-SQL ist.

6. Datenbanksystem nach einem der vorangehenden Ansprüche, wobei eine Zahl der Hierarchiestufen in irgendeinem von den Sätzen elektronischer Dokumente kleiner oder gleich einer höchsten vordefinierten Zahl von Hierarchiestufen ist.

7. Datenbanksystem nach einem der vorangehenden Ansprüche, wobei die hierarchische Struktur, die beim Zurückschicken der hierarchischen Struktur als mehrere Tupel zurückgeschickt wird, die direkte Parent-Child-Beziehungen zwischen den elektronischen Dokumenten aller Paare aus den Child- und den Parent-Sätzen bestimmen, die im Prozess des wiederholten Ausführens des Identifizierens des Child-Satzes elektronischer Dokumente identifiziert werden, als Advanced Business Application Programming, ABAP, Verbrauchsgut formuliert ist.

8. Datenbanksystem nach einem der vorangehenden Ansprüche, wobei das computerimplementierte Verfahren umfasst:
• Erzeugen einer Datenbankansicht, die für eine Betrachtung eines vollständigen Satzes aus Dokumentendaten, die eine vorgegebene Anzahl M hierarchischer Stufen in der Dokumentendatenbank umspannen, oder für einen Zugriff darauf ausgelegt ist, wobei die hierarchische Struktur beim Zurückschicken der hierarchischen Struktur als mehrere Tupel, die direkte Parent-Child-Beziehungen zwischen den elektronischen Dokumenten aller Paare aus den Child- und den Parent-Sätzen bestimmen, die im Prozess des wiederholten Ausführens des Identifizierens des Child-Satzes elektronischer Dokumente identifiziert werden, in Form der Datenbankansicht zurückgeschickt wird (903).

9. Datenbanksystem nach Anspruch 8, wobei die Datenbankansicht in Data Descriptive Language, DDL spezifiziert ist und codiert ist, um durch Verwenden von "where"-Bestimmungen in "select"-Aussagen einen Zugriff auf ausgewählte Daten in der Dokumentendatenbank zu beschränken.

10. Datenbanksystem nach einem der Ansprüche 8 oder 9, wobei das wiederholte Ausführen des Identifizierens des Child-Satzes elektronischer Dokumente ein Zugreifen auf die Datenbankansicht über eine Ausführung einer Abfrage in Structured Query Language, SQL, umfasst, wobei die Abfrage verschachtelte Self-Join-Befehle einer American National Standards Institute SQL, ANSI-SQL, (828, 829) umfasst, um eine Datenbanktabelle (800) 1 bis M-Mal in sich selbst zu verknüpfen, um jeweils Datenaufzeichnungen mit Hierarchiestufen 1 bis M zu erzeugen, wobei in der Datenbanktabelle Tupeln gespeichert sind.

11. Computerimplementiertes Verfahren zum Betreiben eines Datenbanksystems (420), umfassend:
einen Speicher (470), in dem eine relationale Datenbank und ein von einem Prozessor ausführbarer Programmcode gespeichert sind, wobei in der relationalen Datenbank hierarchisch strukturierte Sätze elektronischer Dokumente gespeichert sind, wobei die hierarchischen Strukturen der elektronischen Dokumente in den hierarchisch strukturierten Sätzen nur durch direkte Parent-Child-Beziehungen der elektronischen Dokumente bestimmt werden, die als Tupel in der relationalen Datenbank gespeichert sind, die Paare aus den elektronischen Dokumenten identifizieren, die durch die direkten Parent-Child-Beziehungen verknüpft sind, wobei die Tupel als Tupel-Tabelle in der relationalen Datenbank gespeichert sind, und
eine Rechenvorrichtung (47), um den prozessorausführbaren Programmcode auszuführen, um zu bewirken, dass die Rechenvorrichtung das computerimplementierte Verfahren ausführt, wobei das computerimplementierte Verfahren umfasst:
• Empfangen einer Datenanfrage zum Abrufen einer hierarchischen Struktur (100) der direkten Parent-Child-Beziehungen eines der Sätze der elektronischen Dokumente, wobei die Datenanfrage ein elektronisches Wurzeldokument in der hierarchischen Struktur (901) spezifiziert;
• wiederholtes Ausführen des folgenden Schrittes als Reaktion auf den Empfang der Datenanfrage zum Abrufen der hierarchischen Struktur der direkten
Parent-Child-Beziehungen in einem der Sätze der elektronischen Dokumente:
o Identifizieren eines Child-Satzes elektronischer Dokumente unter Verwendung der Tupel-Tabelle, wobei jedes von den elektronischen Dokumenten des Child-Satzes jeweils eine direkte Parent-Child-Beziehung mit genau einem elektronischen Dokument eines Parent-Satzes elektronischer Dokumente hat,
bis die Ausführung des Identifizierens des Child-Satzes einen leeren Child-Satz als Ergebnis hat, wobei der Parent-Satz aus dem elektronischen Wurzeldokument besteht, wenn das Identifizieren des Child-Satzes das erste Mal ausgeführt wird, wobei der Child-Satz der aktuellen Wiederholung und der Parent-Satz der als nächstes folgenden Wiederholung identisch sind (902); und
• Zurückschicken der hierarchischen Struktur als mehrere Tupel, durch die direkte Parent-Child-Beziehungen zwischen den elektronischen Dokumenten aller im Prozess des wiederholten Ausführens des Identifizierens des Child-Satzes elektronischer Dokumente identifizierten Paare aus den Child- und den Parent-Sätzen bestimmt werden (903),
wobei ein Prozess des wiederholten Ausführens des Identifizierens des Child-Satzes elektronischer Dokumente in Form einer Abfrage aus der relationalen Datenbank in Structured Query Language, SQL, ausgeführt wird (806), wobei jede Identifizierung des Child-Satzes der elektronischen Dokumente im Prozess des wiederholten Ausführens des Identifizierens des Child-Satzes elektronischer Dokumente jeweils ein Fragment der SQL-Abfrage (811-815, 818-829) enthält, das dafür ausgelegt ist, den Child-Satz der elektronischen Dokumente zu identifizieren, der in jeder Identifizierung des Child-Satzes der elektronischen Dokumente identifiziert wird,
wobei jedes von den Fragmenten der SQL-Abfrage, außer dem Fragment der SQL-Abfrage, das der ersten im Prozess des wiederholten Ausführens des Identifizierens des Child-Satzes elektronischer Dokumente (811-815) ausgeführten Identifizierung des Child-Satzes der elektronischen Dokumente entspricht, jeweils eine Abfolge wiederkehrender Anfragen (818-823, 824-827) umfasst, mit
- einer ersten Anfrage (824-827), die einen oder mehrere SQL-Select-Befehle (824-826) umfasst, die dafür ausgelegt sind, durch Abrufen einer Tupel-Untertabelle (850) aus Tupeln, in denen das elektronische Wurzeldokument jeweils als elektronisches Parent-Dokument spezifiziert ist, aus der Tupel-Tabelle den Child-Satz elektronischer Dokumente zu identifizieren, der das elektronische Wurzeldokument als elektronisches Parent-Dokument hat, wobei die erste Anfrage eine erste Anfrage in der jeweiligen Abfolge wiederkehrender Anfragen ist, und
- einer letzten Anfrage (818-823), die dafür ausgelegt ist, den Child-Satz der elektronischen Dokumente zu identifizieren, der beim Ausführen der Identifizierung der elektronischen Dokumente identifiziert wird, die jeweils den Fragmenten der SQL-Abfrage außer dem Fragment der SQL-Abfrage entspricht, das der ersten im Prozess des wiederholten Ausführens des Identifizierens des Child-Satzes elektronischer Dokumente ausgeführten Identifizierung des Child-Satzes der elektronischen Dokumente entspricht, wobei die letzte Anfrage jeweils eine erste Anfrage in einer Abfolge wiederkehrender Anfragen ist,
wobei jede nächste Anfrage in der Abfolge wiederkehrender Anfragen einen oder mehrere SQL-Select-Befehle (818-823) umfasst, die ausgelegt sind zum
Identifizieren des Child-Satzes der elektronischen Dokumente, die jeweils eine direkte Parent-Child-Beziehung mit genau einem der elektronischen Dokumente des Child-Satzes haben, der in der vorangehenden Anfrage in der Abfolge wiederkehrender Anfragen identifiziert worden ist,
durch Abrufen einer Tupel-Untertabelle (860) von Tupeln, in denen jeweils eines der elektronischen Dokumente des Child-Satzes, der in der vorangehenden Anfrage identifiziert worden ist, als elektronisches Parent-Dokument spezifiziert ist,
aus einer Tabelle, die unter Verwendung eines SQL-Join-Befehls (828, 829) aus einer Tupel-Untertabelle, die in der vorangehenden Anfrage abgerufen wurde, erzeugt wird, und wobei die Tupel-Tabelle eine Join-Bedingung aufweist, die spezifiziert, dass alle elektronischen Dokumente, die in einem oder mehreren Tupeln der Tupel-Untertabelle, die in der vorangehenden Anfrage abgerufen wurde, als elektronische Child-Dokumente spezifiziert sind, in einem oder mehreren Tupeln der Tupel-Tabelle als elektronische Parent-Dokumente spezifiziert sind,
wobei das Fragment der SQL-Abfrage, das der ersten Ausführung der Identifizierung des Child-Satzes elektronischer Dokumente entspricht, nur die erste Anfrage umfasst (811-815),
wobei die SQL-Abfrage gemäß einem Query-Plan ausgeführt wird, in dem:
- die Ausführung des Fragments der SQL-Abfrage, das der ersten Ausführung der Identifizierung des Child-Satzes der elektronischen Dokumente entspricht, als erstes geplant wird,
- nach der Ausführung des Fragments der SQL-Anfrage, das der ersten Ausführung der Identifizierung des Child-Satzes der elektronischen Dokumente entspricht, die Ausführung nur der letzten Anfrage in jedem der Fragmente der SQL-Abfrage in derselben Abfolge geplant wird, wie ihre jeweiligen Schritte der Identifizierung des Child-Satzes elektronischer Dokumente im Prozess der wiederholten Ausführung der Identifizierung des Child-Satzes elektronischer Dokumente ausgeführt werden, wobei die Tupel-Untertabelle, die gemäß dem Query-Plan bei der Ausführung der letzten Anfrage irgendeines der Fragmente der SQL-Abfrage außer dem Fragment der SQL-Abfrage, dessen Ausführung im Query-Plan als erstes geplant ist, abgerufen werden soll, zur Verwendung als Tupel-Untertabelle für die Ausführung der letzten Anfrage des Fragments der SQL-Abfrage, deren Ausführung im Query-Plan als letzte geplant ist, nach der letzten Anfrage irgendeines der Fragmente der SQL-Anfrage außer dem Fragment der SQL-Anfrage, dessen Ausführung im Query-Plan als letztes geplant ist, geplant ist.

12. Computerlesbares Medium, auf dem ein computerausführbarer Programmcode zur Ausführung durch einen Computerprozessor gespeichert ist, welcher eine Rechenvorrichtung eines Datenbanksystems steuert, wobei die Ausführung der Anweisungen des ausführbaren Programmcodes bewirkt, dass der Computerprozessor die Rechenvorrichtung so steuert, dass diese das computerimplementierte Verfahren nach Anspruch 11 am Datenbanksystem ausführt.

## Revendications

1. Système de base de données (420) comprenant :
une mémoire (470) stockant une base de données relationnelle et un code de programme exécutable par un processeur, la base de données relationnelle stockant des ensembles de documents électroniques structurés hiérarchiquement, où les structures de hiérarchie des documents électroniques dans les ensembles structurés hiérarchiquement sont déterminées uniquement par des relations directes parent-enfant des documents électroniques stockés dans la base de données relationnelle sous forme de tuples (802 à 804) identifiant des paires des documents électroniques reliées par les relations directes parent-enfant, où les tuples sont stockés sous forme d'un tableau de tuples (800) dans la base de données relationnelle, et
un dispositif informatique (47) pour exécuter le code de programme exécutable par un processeur afin de faire en sorte que le dispositif informatique exécute les étapes suivantes d'un procédé mis en oeuvre par ordinateur :
• de réception d'une requête de données pour récupérer une structure hiérarchique (100) des relations directes parent -enfant dans l'un des ensembles des documents électroniques, la requête de données spécifiant un document électronique de départ dans ladite structure hiérarchique (901) ;
• en réponse à la réception de la requête de données pour la récupération de ladite structure hiérarchique des relations directes parent-enfant dans l'un des ensembles des documents électroniques, l'exécution de manière répétée de l'étape suivante
∘ d'identification d'un ensemble enfant de documents électroniques en utilisant le tableau de tuples, où chacun des documents électroniques de l'ensemble enfant a une relation directe parent-enfant respective avec un des documents électroniques d'un ensemble parent de documents électroniques,
jusqu'à ce que l'exécution de l'identification de l'ensemble enfant ait pour résultat un ensemble enfant vide, où l'ensemble parent est constitué du document électronique de départ lorsque l'identification de l'ensemble enfant est exécutée pour la première fois, où l'ensemble enfant de la répétition en cours et l'ensemble parent de la répétition suivante sont le même ensemble (902) ; et
• de remise en place de ladite structure hiérarchique sous la forme d'une pluralité de tuples déterminant des relations directes parent-enfant entre les document électroniques de toutes les paires des ensembles enfant et parent identifiés dans le processus de l'exécution répétitive de l'identification de l'ensemble enfant de documents électroniques (903),
où un processus d'exécution répétitive de l'identification de l'ensemble enfant de documents électroniques est exécuté sous la forme d'une requête (806) en langage de requête structuré, SQL, de la base de données relationnelle, où chacune des identifications de l'ensemble enfant de documents électroniques dans le processus d'exécution répétitive de l'identification de l'ensemble enfant de documents électroniques a un fragment respectif de la requête SQL (811 à 815, 818 à 829) configuré pour identifier l'ensemble enfant des documents électroniques identifié dans chacune des identifications de l'ensemble enfant de documents électroniques,
où chacun des fragments de la requête SQL, à l'exception du fragment de la requête SQL correspondant à la première identification exécutée de l'ensemble enfant des documents électroniques dans le processus de l'exécution répétitive de l'identification de l'ensemble enfant de documents électroniques (811 à 815), comprend une séquence respective de requêtes récurrentes (818 à 823, 824 à 827) ayant
- une première requête (824 à 827) comprenant une ou plusieurs commandes de sélection SQL (824 à 826) étant configurées pour identifier l'ensemble enfant de documents électroniques ayant le document électronique de départ en tant que document électronique parent par la forme de récupération du tableau de tuples d'un tableau de tuples auxiliaire (850) de tuples dans chacun desquels le document électronique de départ est spécifié en tant que document électronique parent, où la première requête est une première requête dans la séquence respective de requêtes récurrentes, et
- une dernière requête (818 à 823) configurée pour identifier un ensemble enfant des documents électroniques qui est identifié dans l'exécution de l'identification des documents électroniques correspondant à chacun des fragments de la requête SQL, à l'exception du fragment de la requête SQL correspondant à la première identification exécutée de l'ensemble enfant des documents électroniques dans le processus de l'exécution répétitive de l'identification de l'ensemble enfant des documents électroniques, où la dernière requête est une première requête dans une séquence respective de requêtes récurrentes,
où chaque requête suivante dans la séquence de requêtes récurrentes comprend une ou plusieurs commandes de sélection SQL (818 à 828) étant configurées pour
identifier l'ensemble enfant des documents électroniques ayant chacun une relation directe parent-enfant avec un des documents électroniques de l'ensemble enfant identifié dans la requête précédente dans la séquence des requêtes récurrentes
par la récupération d'un tableau de tuples auxiliaire (860) de tuples dans chacun desquels un des documents électroniques de l'ensemble enfant identifié dans la requête précédente est spécifié en tant document électronique parent
à partir d'un tableau généré en utilisant une commande de jonction SQL (828, 829) d'un tableau de tuples auxiliaire récupéré dans la requête précédente et du tableau de tuples ayant une condition de jonction spécifiant que tous les documents électroniques spécifiés en tant que documents électroniques enfant dans un ou plusieurs tuples du tableau de tuples auxiliaire récupéré dans la requête précédente sont spécifiés en tant que documents électroniques parents dans un ou plusieurs tuples dans le tableau de tuples,
où le fragment de la requête SQL correspondant à la première exécution de l'identification de l'ensemble enfant de documents électroniques comprend uniquement la première requête (811 à 815),
où la requête SQL est exécutée selon un calendrier de requêtes, dans lequel :
- l'exécution du fragment de la requête SQL correspondant à la première exécution de l'identification de l'ensemble enfant des documents électroniques est planifiée en premier,
- après l'exécution du fragment de la requête SQL correspondant à la première exécution de l'identification de l'ensemble enfant des documents électroniques, l'exécution uniquement de la dernière requête dans chacun des fragments de la requête SQL est planifiée dans la même séquence que leurs étapes respectives de l'identification de l'ensemble enfant des documents électroniques sont exécutées dans le processus de l'exécution répétitive de l'identification de l'ensemble enfant de documents électroniques, où la table de tuples auxiliaire à récupérer en fonction de la planification de requêtes dans l'exécution de la dernière requête de l'un des quelconque fragments de la requête SQL, à l'exception du fragment de la SQL planifié en premier pour l'exécution dans le calendrier des requêtes, est planifiée pour être utilisée en tant que tableau de tuples auxiliaire pour l'exécution de la dernière requête du fragment de la requête SQL planifiée pour l'exécution dans le calendrier de requêtes après la dernière requête de l'un quelconque des fragments de la requête SQL, à l'exception du fragment de la requête SQL planifié en premier pour l'exécution dans le calendrier de requêtes.

2. Système de base de données selon la revendication 1, dans lequel toutes les relations directes parent-enfant des documents électroniques de l'ensemble parent avec les documents électroniques de l'ensemble enfant identifiés dans une quelconque étape exécutée de manière répétitive de l'identification de l'ensemble enfant de documents électroniques, dont l'exécution a eu pour résultat un ensemble enfant non vide, ont un niveau hiérarchique dans ladite structure hiérarchique étant un niveau de hiérarchie inférieur dans ladite structure hiérarchique de toutes les relations directes parent-enfant des documents électroniques de l'ensemble parent avec les documents électroniques de l'ensemble enfant identifié dans l'étape d'identification de l'ensemble enfant de documents électroniques exécutée immédiatement avant l'une quelconque étape exécutée de manière répétitive d'identification de l'ensemble enfant de documents électroniques.

3. Système de base de données selon l'une quelconque des revendications précédentes, dans lequel la réception de la requête de données pour la récupération de ladite structure hiérarchique des relations directes parent-enfant dans un des ensembles de documents électroniques, la requête de données comprend la réception, sur le système de base de données, à partir d'un système informatique (410), par le biais d'un réseau informatique, où le remise en place de ladite structure hiérarchique sous la forme de la pluralité de tuples déterminant les relations directes parent-enfant entre les documents électroniques de toutes les paires d'ensembles parent et enfant identifiées dans le processus d'exécution répétitive de l'identification de l'ensemble enfant de documents électroniques comprend l'envoi de la pluralité des tuples au système informatique par le biais du réseau informatique.

4. Système de base de données selon l'une quelconque des revendications précédentes, dans lequel la requête SQL comprend une union SQL de toutes les commandes (816, 830, 835) configurée pour réunir dans un tableau de hiérarchie :
- le tableau de tuples auxiliaire (850) généré dans la première requête compris dans le fragment de la requête SQL correspondant à la première exécution de l'identification de l'ensemble enfant de documents électroniques, et
tous les tableaux de tuples auxiliaires (860) générés dans une ou plusieurs des dernières requêtes correspondant à chacun des fragments de la requête SQL, à l'exception du fragment de la requête SQL correspondant à la première identification exécutée de l'ensemble enfant de documents électroniques dans le processus de l'exécution répétitive de l'identification de l'ensemble enfant de documents électroniques.
où ladite structure hiérarchique remise en place dans le remise en place de ladite structure hiérarchique sous forme de la pluralité de tuples déterminant les relations directes parent-enfant entre les documents électroniques de toutes les paires des ensembles enfant et parent identifiées dans le processus de l'exécution répétitive de l'identification de l'ensemble enfant de documents électroniques est le tableau de hiérarchie.

5. Système de base de données selon l'une quelconque des revendications précédentes, dans lequel le SQL est un langage SQL de l'Institut des Normes Nationales Américaines, ANSI-SQL.

6. Système de base de données selon l'une quelconque des revendications précédentes, dans lequel un nombre de niveaux de hiérarchie dans l'un des ensembles de documents électroniques quelconque est inférieur ou égal à un nombre prédéfini maximum de niveaux de hiérarchie.

7. Système de base de données selon l'une quelconque des revendications précédentes, dans lequel ladite structure hiérarchique remise en place dans le remise en place de ladite structure hiérarchique sous forme d'une pluralité de tuples déterminant des relations directes parent-enfant entre les documents électroniques de toutes les paires d'ensembles enfant et parent identifiées dans le processus de l'exécution répétitive de l'identification de l'ensemble enfant de documents électroniques est formulée en tant que consommable d'un langage Advanced Business Application Programming, ABAP.

8. Système de base de données selon l'une quelconque des revendications précédentes, dans lequel le procédé mis en oeuvre par ordinateur comprend
• la génération d'une vue de base de données configurée pour visualiser ou accéder à un ensemble complet de données de documents recouvrant un nombre M spécifié de niveaux hiérarchiques dans la base de données de documents, où ladite structure hiérarchique remise en place dans le remise en place de ladite structure hiérarchique sous forme d'une pluralité de tuples déterminant des relations directes parent-enfant entre les documents électroniques de toutes les paires des ensembles enfant et parent identifiées dans le processus de l'exécution répétitive de l'identification de l'ensemble enfant de documents électroniques est remise en place dans une forme de la vue de base de données (903).

9. Système de base de données selon la revendication 8, dans lequel la vue de base de données est spécifiée dans le langage de description de données, DDL, et est codée pour limiter un accès à des données sélectionnées dans la base de données de documents en utilisant des clauses « où » dans les déclarations « sélectionner ».

10. Système de base de données dans l'une quelconque des revendications 8 ou 9, dans lequel l'exécution répétitive de l'identification de l'ensemble enfant de documents électroniques comprend l'accès de la vue de base de données par le biais d'une exécution d'une requête en langage de requête structuré SQL comprenant des commandes de jointure réflexive imbriquées du langage SQL de l'American National Standards Institute, ANSI-SQL (828, 829) pour joindre de manière réflexive un tableau de base de données (800) 1 à M fois pour générer des enregistrements de données avec des niveaux de hiérarchie de 1 à M respectivement, du tableau de base de données stockant les tuples.

11. Procédé mis en oeuvre par ordinateur pour faire fonctionner un système de base de données (420), comprenant
une mémoire (470) stockant une base de données relationnelle et un code de programme exécutable par un processeur, la base de données relationnelle stockant des ensembles de documents électroniques structurés hiérarchiquement, où les structures de hiérarchie des documents électroniques dans les ensembles structurés hiérarchiquement sont déterminées uniquement par des relations directes parent-enfant des documents électroniques stockés dans la base de données relationnelle sous forme de tuples identifiant des paires des documents électroniques reliées par les relations directes parent-enfant, où les tuples sont stockés sous forme d'un tableau de tuples (800) dans la base de données relationnelle, et
un dispositif informatique (47) pour exécuter le code de programme exécutable par un processeur afin de faire en sorte que le dispositif informatique exécute le procédé mis en oeuvre par ordinateur, comprenant :
• la réception d'une requête de données pour récupérer une structure hiérarchique (100) des relations directes parent-enfant dans l'un des ensembles des documents électroniques, la requête de données spécifiant un document électronique de départ dans ladite structure hiérarchique (901) ;
• en réponse à la réception de la requête de données pour la récupération de ladite structure hiérarchique des relations directes parent-enfant dans l'un des ensembles des documents électroniques, l'exécution de manière répétée de l'étape suivante
∘ d'identification d'un ensemble enfant de documents électroniques en utilisant le tableau de tuples, où chacun des documents électroniques de l'ensemble enfant a une relation directe parent-enfant respective avec un des documents électroniques d'un ensemble parent de documents électroniques,
jusqu'à ce que l'exécution de l'identification de l'ensemble enfant ait pour résultat un ensemble enfant vide, où l'ensemble parent est constitué du document électronique de départ lorsque l'identification de l'ensemble enfant est exécutée pour la première fois, où l'ensemble enfant de la répétition en cours et l'ensemble parent de la répétition suivante sont le même ensemble(902) ; et
• la remise en place de ladite structure hiérarchique sous la forme d'une pluralité de tuples déterminant des relations directes parent-enfant entre les documents électroniques de toutes les paires des ensembles enfant et parent identifiés dans le processus de l'exécution répétitive de l'identification de l'ensemble enfant de documents électroniques (903),
où un processus d'exécution répétitive de l'identification de l'ensemble enfant de documents électroniques est exécuté sous la forme d'une requête (806) en langage de requête structuré, SQL, (806) de la base de données relationnelle, où chacune des identifications de l'ensemble enfant de documents électroniques dans le processus d'exécution répétitive de l'identification de l'ensemble enfant de documents électroniques a un fragment respectif de la requête SQL (811 à 815, 818 à 829) configuré pour identifier l'ensemble enfant des documents électroniques identifié dans chacune des identifications de l'ensemble enfant de documents électroniques,
où chacun des fragments de la requête SQL, à l'exception du fragment de la requête SQL correspondant à la première identification exécutée de l'ensemble enfant des documents électroniques dans le processus de l'exécution répétitive de l'identification de l'ensemble enfant de documents électroniques (811 à 815), comprend une séquence respective de requêtes récurrentes (818 à 823, 824 à 827) ayant
- une première requête (824 à 827) comprenant une ou plusieurs commandes de sélection SQL (824 à 826) étant configurées pour identifier l'ensemble enfant de documents électroniques ayant le document électronique de départ en tant que document électronique parent par la forme de récupération du tableau de tuples d'un tableau de tuples auxiliaire (850) de tuples dans chacun desquels le document électronique de départ est spécifié en tant que document électronique parent, où la première requête est une première requête dans la séquence respective de requêtes récurrentes, et
- une dernière requête (818 à 823) configurée pour identifier l'ensemble enfant des documents électroniques qui est identifié dans l'exécution de l'identification des documents électroniques correspondants à chacun des fragments de la requête SQL, à l'exception du fragment de la requête SQL correspondant à la première identification exécutée de l'ensemble enfant des documents électroniques dans le processus de l'exécution répétitive de l'identification de l'ensemble enfant des documents électroniques, où la dernière requête est une première requête dans une séquence respective de requêtes récurrentes,
où chaque requête suivante dans la séquence de requêtes récurrentes comprend une ou plusieurs commandes de sélection SQL (818 à 828) étant configurées pour
identifier l'ensemble enfant des documents électroniques ayant chacun une relation directe parent-enfant avec un des documents électroniques de l'ensemble enfant identifié dans la requête précédente dans la séquence des requêtes récurrentes
par la récupération d'un tableau de tuples auxiliaire (860) de tuples dans chacun desquels un des documents électroniques de l'ensemble enfant identifié dans la requête précédente dans la séquence de requêtes récurrentes tant que document électronique parent,
à partir d'un tableau généré en utilisant une commande de jonction SQL (828, 829) d'un tableau de tuples auxiliaire récupéré dans la requête précédente et du tableau de tuples ayant une condition de jonction spécifiant que tous les documents électroniques spécifiés en tant que documents électroniques enfant dans un ou plusieurs tuples du tableau de tuples auxiliaire récupéré dans la requête précédente sont spécifiés en tant que documents électroniques parents dans un ou plusieurs tuples dans le tableau de tuples,
où le fragment de la requête SQL correspondant à la première exécution de l'identification de l'ensemble enfant de documents électroniques comprend uniquement la première requête (811 à 815),
où la requête SQL est exécutée selon un calendrier de requêtes, dans lequel :
- l'exécution du fragment de la requête SQL correspondant à la première exécution de l'identification de l'ensemble enfant des documents électroniques est planifiée en premier,
- après l'exécution du fragment de la requête SQL correspondant à la première exécution de l'identification de l'ensemble enfant des documents électroniques, l'exécution d'uniquement la dernière requête des fragments de la requête SQL est planifiée dans la même séquence, alors que leurs étapes respectives de l'identification de l'ensemble enfant de documents électroniques sont exécutés dans le processus de l'exécution répétitive de l'identification de l'ensemble enfant de documents électroniques, où le tableau de tuples auxiliaire à récupérer en fonction du calendrier de requêtes dans l'exécution de la dernière requête de l'un des fragments de la requête SQL, à l'exception du fragment de la SQL planifié en premier pour l'exécution dans le calendrier de requêtes, est planifiée pour être utilisé en tant que tableau de tuples auxiliaire pour l'exécution de la dernière requête du fragment de la requête SQL planifiée pour l'exécution dans le calendrier de requêtes après la dernière requête de l'un quelconque des fragments de la requête SQL, à l'exception du fragment de la requête SQL planifié en premier pour l'exécution dans le calendrier de requêtes.

12. Support lisible par ordinateur ayant stocké un code de programme exécutable par un ordinateur pour l'exécution, par un processeur d'ordinateur d'une commande d'un dispositif informatique d'un système de base de données, où l'exécution des instructions du code de programme exécutable fait en sorte que le processeur d'ordinateur commandant le dispositif informatique exécute le procédé mis en oeuvre par ordinateur selon la revendication 11 sur le système de base de données.
